# EUROPEAN PATENT SPECIFICATION

(11) **EP 2 306 614 B1**
(45) Date of publication and mention of the grant of the patent: **03.04.2013**
(21) Application number: 10175521.3
(22) Date of filing: 02.06.1997
(51) Int. Cl.: H02J 9/06, H02J 7/14, B60L 11/12, B60L 15/20

(54) **System of automatic surveillant revolving storage battery auxiliary charge**
System zur automatischen Überwachung einer drehenden Hilfs-Speicherbatterieladung
Système de surveillance automatique de la charge tournante d'une batterie de réserve

(43) Date of publication of application: 06.04.2011
(62) Divisional of application: 97303736.9
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A1- 0 543 390
- EP-A1- 0 698 522
- DE-A1- 4 306 381
- US-A- 5 345 761
- US-A- 5 359 308
- US-A- 5 418 437

## Description

The subject System of Automatic Surveillant Revolving Storage Battery Auxiliary Charge provides essentially an auxiliary power supply furnished with engine Dynamo for Battery Power System, to provide various forms of auxiliary charging and power supply, so as to upgrade power supply capabilities on an uninterrupted mode under a variety of charging conditions.

EP0698522A1 discloses an electric generation control system for hybrid vehicles, wherein when the remaining capacity of a batter on a hybrid vehicle is smaller than a threshold value or the battery is unable to output the amount of electric energy required to propel the hybrid vehicle with a propulsive electric motor, an engine is started by a generator which operates in a motor mode. The engine rotational speed is brought to a predetermined value by the generator, at which time fuel is supplied to the engine. After the engine has achieved full combustion and has been warmed up, the generator operates in a generator mode to generate electric energy which is supplied to the battery and the propulsive electric motor. The threshold value for the remaining capacity of the battery is greater as the atmospheric pressure is lower. Therefore, if the vehicle is running under low atmospheric pressure such as on high ground, the electric energy is supplied from the generator to the battery and the propulsive electric motor at an early stage where the capacity of the battery is relatively high. The generator also starts to generate electric energy when the battery is unable to output an amount of electric energy sufficient enough to propel the vehicle.

An aspect of the invention is an electric power source according to claim 1.

### BRIEF DESCRIPTION OF THE DRAWINGS

Fig. 1 is a block diagram of the Invention System;

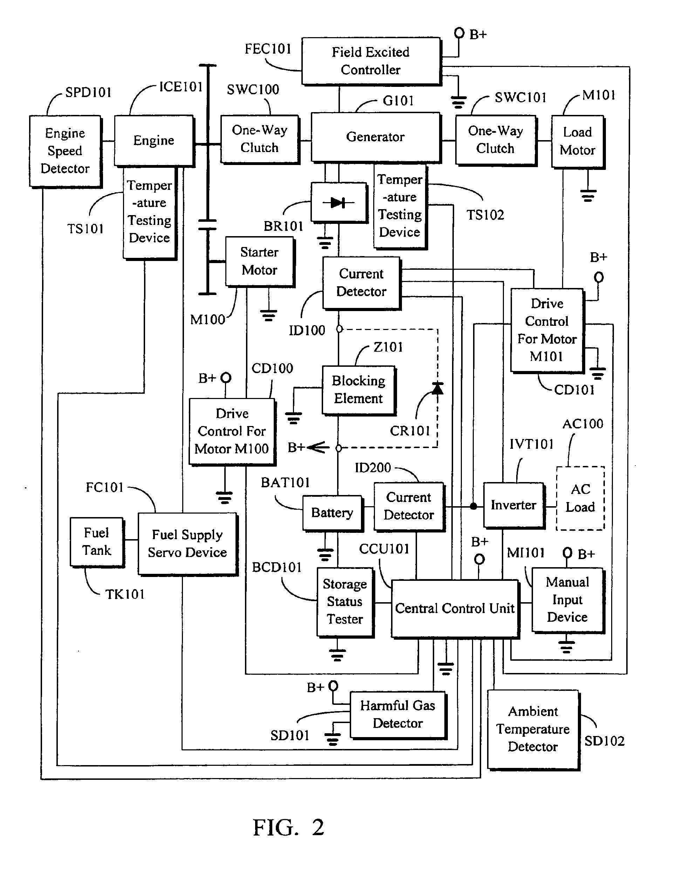

Fig. 2 is a block diagram of the Invention System illustrated with a blocking diode CR 101 and blocking element Z 101 both provided to control Battery Potential and Power 25 as generated;
Fig. 3 is a block diagram showing, as incorporated in the Invention System, a blocking diode CR 101 and operable two-way switch SSW 101, meant to control battery potential and Power as generated;

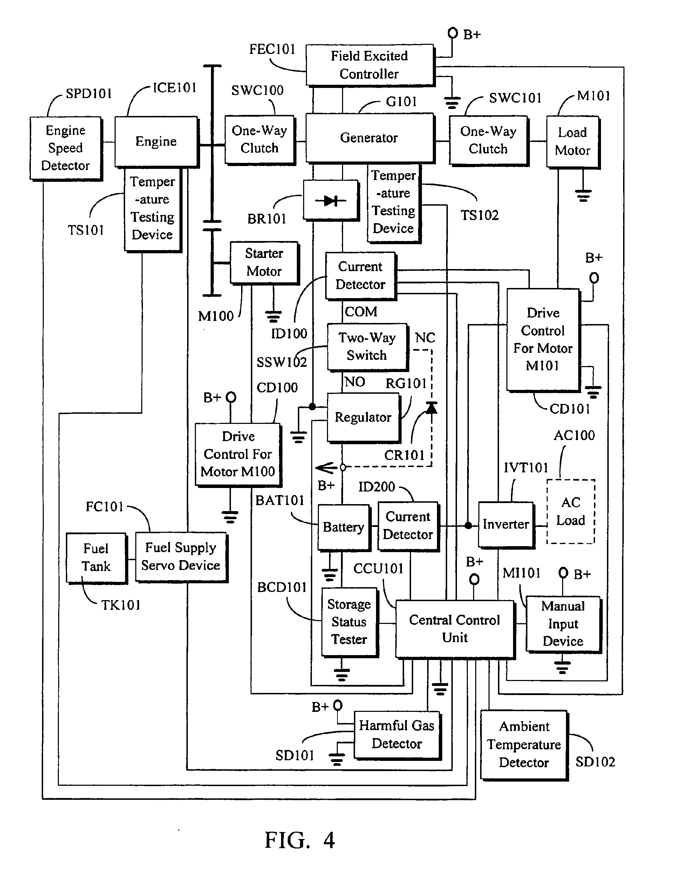

Fig. 4 is a block diagram showing, as incorporated in the Invention System, blocking diode CR 101 and Regulator RG 101 meant to control point C Contact Switch SSW102, and eventually to control Battery Potential and power by generation.

### DETAILED DESCRIPTION OF THE INVENTION

By and large owing to its portability and volumetric density utility features, storage batteries are largely used in emergency power systems and power driven transporters, the pity, however, is that to serve longer term loading requirements and enlarge battery capacities, increase in costs and overall weights are inevitably incurred, in addition, battery serviceable life can also be undermined due to exposure to more profound discharging tasks under heavy load conditions; with the subject System Charging Source of Automatic Surveillant Revolving Storage Battery Auxiliary Charge is derived from Engine Dynamo to render auxiliary charging where needed to stationary or carrier-laden batteries so as to keep them in adequately stored condition at all times ready for all eventualities.

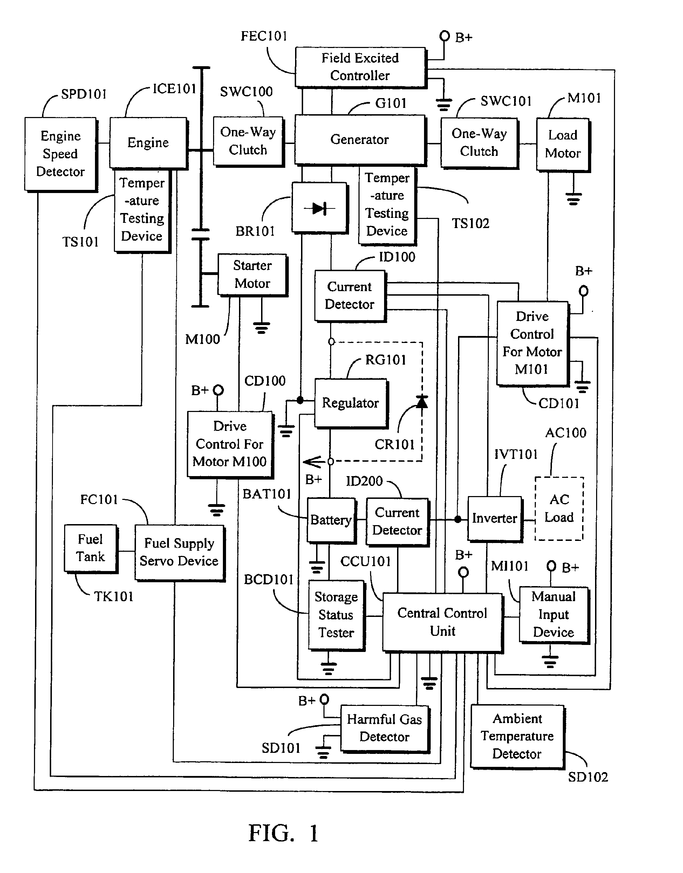

Referring to Fig. 1, a block diagram of the Invention System, it is seen that the subject System of Automatic Surveillant Revolving Storage Battery Auxiliary Charge is composed essentially of:
-Battery BAT 101 : which is basically a secondary Battery capable of repeated charging/discharging recycling operation, which can be , for example, a battery of the plumbous acid, nickel/cadmium, nickel/nitrogen, or nickel/zinc structure or else of the lithium system, or still of the zinc system or otherwise secondary battery system;
-Storage Status Tester BCD 101: which is provided to conduct continuous or periodical testing or else to convert to digital or analoguy power signal output for comparisons using relevant charging or discharging, or static loading errors followed by a correction process, and comprises mechanic or solid state electronic elements which form analoguy testing ckts, or alternatively digital testing ckts consisting of microprocessors and relevant software, interfacing electronic elements, or else a combination of both executions;
-Regulator RG 101: composed of mechanic or solid state electronic elements, optional contingent on system requirements, which, by referencing output voltage/current from Generator G 101, or alternatively receiving instructions coming from Central Control Unit CCU 101, feeds back output power to the Prime Generator G 101;
-Current Detector ID 100: connected in series to the output terminal of Generator G 101, with current sampling means comprising resistive or conductive elements or else magnetic field sensors, or still means of the heat cumulation or electromagnetic effect type capable of yielding current testing values to be converted into analogue signals with which to produce an output current for the Generator G 101 being tested or input current under specific conditions, by which to control, regulate the Regulator RG 101, or else to be fed to CCU 101, so as to control in turn the operation condition of Generator G 101, which is also an optional choice;
- Current Detector ID 200: seriesly connected between input/output terminals of Battery BAT 101 and the Transmission Control CD 101 or Rectifier IVT 101; with current sampling means comprising purely resistive element or conductive element or a combination of both, or else elements may be sensed, tested by the strength of magnetic fields, or else composed of devices capable of producing analoguy signals by the measured currents of the heat cumulation type or magnetic effect testing type, meant to test the output or input current of the Battery to be tested, then fed to the Drive Control CD 101 or CCU 101, so as to control in suit the output power BAT 101, which is also an optional choice;
- Engine Set ICE 101: Revolving or Reciprocating Internal Combustion Engine using gasoline or Diesel oil or gas or other fluid fuel for conversion into dynamic power for output purpose;
- Generator G 101: comprising armatured or unarmatured mechanism, D.C. or A.C., to convert the incoming Engine Revolving Power into A.C. or D.C. power, or in the case ofA.C. power, to convert same through rectification at rectifier B 101 into D.C. output to drive load motor M 101 and to charge the Batteries;
- Rectifier BR 101: to convert by rectifying single phase or multiple phase A.C. power into D.C. Power in dealing with A.C.Dynamos, an optional choice depending upon system requirements;
- Field excited Control FEC 101: composed of mechanic or solid state elements, to control the power outcoming from A.C. or D.C. Generator comprising field Excited Windings, basing on Generator Output Status and the Manual Control Device MI101 and CCU 101 settings, so as to achieve in regulatory control of voltage, current or power rate, this feature to be saved where the Generator Pole is of a permanent magnet type ;
- Engine Speed Detector SPD 101: analoguy or digital in execution, capable or converting angular displacements into correspondent electric signals in electromagnetic or photoelectric forms so as to feed engine speed signals to CCU 101, and consequently regulate the feed of fuel way from Servomechanism FC 101 to Engine Set, while signal value of this device can also be substituted by the analogous voltage or frequency value as the case may be; this Engine Speed Detector SPD 101 can also be made to consist of mechanical structure, such as, for example, Centrifugal Testing Structure or otherwise mechanical structure, and made in mechanical interaction with fuel supply Servomechanism FC 101 so as to bring Engine Set ICE 101 into fixed speed rotation, both executions disclosed hereinbefore are to be adopted depending on the nature of the system involved, and the device on top of that, is an optional choice contingent on system requirements;
- Tansmission Motor M 100: compsed of an electric structure synchronous or asynchronous, A.C. or D.C., armatured or unarmatured, to receive input power so as to produce revolving power to initiate in turn the Engine Set ICE 101;
- Fuel Supply Servo Device FC 101: to receive electric power servo instructions or alternatively mechanic interaction, structured so as to control the fuel supply to Engine Set ICE 101, and that in turn to regulate rotation speed and torsion on the part of Engine Set ICE 101, both executions optionable contingent on system makeup;
- Fuel Tank TK 101: where engine fuel is stored, to control fuel supplied to Engine Set ICE 101 by means of Fuel Line and Fuel Supply Servo Device FC 101 interconnected therebetween;
- Drive Control CD 100: composed essentially of Mechanical or solid state power elements and associated ckts., to drive Startup Motor into operation or else to stop its operation;
- Drive Control CD 101: composed of mechanical or solid state elements and relevant ckts, to control the Load Motor M 101 for forward/reverse rotation, speed regulation, startup and stop functioning, in respect of which the quantity to be supplied is contingent on system requirements;
- Load Motor M 101: composed of A.C. or D.C., armatured or inarmatured, synchronous or asynchronous Motor, realizing forward rotation, reverse rotation, speed regulation, operation, and stopping and such like functions so as to transmit a load, the Load Motor M 101 may also be made to consist of other loads in respect of which the quantity of installation is dictated by system requirements;
- Auxiliary Power Supply B+ : with power sourced to Battery BAT 101 in the system, or with an additionally provided Battery Set serving as the Auxiliary Power Supply or as derived from Dynamo Generation, and that in an effort to offer power supply to the Central Control Unit CCU 101, or Manual Control Unit MI 101, or the Drive Control CD 101 to Load Motor M 101, or else to Harmful Gas Detector SD 101, or Drive Control CD 101 to Startup Motor M 100, or to Field Excitied Control EFC 101, or still Regulator RG 101, or still else such as lighting facilities for functioning, where Auxiliary Battery is provided, the Generator may be additionally furnished with correspondent Generation Windings to facilitate charging of the auxiliary battery;
- D.C. to A.C. Invertor IVT 101: composed of solid state power rate elements and associated ckts, to convert D.C. power into A.C. power so as to enpower A.C. loads, in respect of which the quantity to be supplied is contingent on system requirements;
- Central Control Unit CCU 101: composed of mechanical or solid state elements which form alternatively analoguy or digital structure or a combined structure of both executions; or still else of microprocessor comprising operation and control softwares , D-A converter, A-D converter or other relevant ckt elements, with internal operation modes set with instructions coming from Manual Control Device MI 101 or feedback signals so as to govern interactions between Generator G 101, Battery BAT 101, Load Motor M 101 or other loads in the control system, as well as other associated devices for a regulated operation;
-- Manual Control Device MI 101: composed singly of mechanic or solid state elements in analogy mode or digital mode as separate from or else composite with each other, for feeding to the Central Control Unit so as to control the overall system operation , in respect of which the quantity to be installed is dependent on system requirements;
- Harmful Gas Detector SD 101: provided to detect the concentration of harmful gases, if any, in the surrounding environments when the charging is in progress, made to the Engine, whether in Manual Control Mode or in Automatic Mode of activation, and the operation will be stopped where the concentration as detected exceeds a safety margin, but allowed for continued operation where the reading detected falls within tolerance, in respect of which the quantity for installation is dictated by system requirements;
- Ambient Temp. Detector SD 102: composed of temp, sensors, plus mechanic or solid state components, intended for automatic detection of ambient temperatures, and with the equivalent electric power signal detected transmitted to CCU 101, so that charging may be suspended, other forms of operation stopped when the ambient temp, thus identified exceeds a given threshold value, whereas continued system operation is allowed where the ambient temp, is found to be within rated working temp, ranges; in respect of which the quantity to be supplied is dependent on system requirements, and the provision, on top of that, is an optional choice.

The invention titled System of Automatic Surveillant Revolving Storage Battery Auxiliary Charge is essentially designed to maintain Storage Battery in adequately charged condition by using Engine Dynamo as its power supply, so as to offer timely auxiliary charging to transmit a Load Motor or otherwise loads, or still to stationary or carrier-laden batteries. In operation, testing measurement is made, basing on manual control modes, or else on Central Control Unit programmed for the purpose, considering battery storage condition, with respect to the battery and with the testing signals thus obtained compared with aforementioned control or programmed value, to effect commensurate controlled operation of Engine Driven Generator Set, incorporating optionally various functions including any or all ofthe following:
(1) the ability to charge and initiate motor and engine,
   Generator exclusively by charging the Battery when, against testing of the Battery Saturation State, the Battery storage is confirmed to have fallen down to preset level;
(2) the ability to deliver power to the Load Motor or other loads and Storage Battery, basing on the result of testing of Storage Battery Saturation State signal, by striking a comparison of the modes of operation programmed in the Central Control Unit, followed with outputting of rated or ratable power or else of fixed current or controlled current by correspondent control of the Generator whereby loading factor is matched or through proportionate apportioning of currents supplied to both, with it being made possible to switch automatically to function (3) described hereinafter where the load aggravated accordingly has exceeded Generator's generation factor, but switching back to prime operation regime when the load factor drops to a level below the Generator Generation power factor;
(3) the ability to effect relative control of the Generator for fixed current or controlled current output, or else for fixed power factor, or controlled power factor output, basing on the current storage condition of the storage battery, so as to apportion, in a controlled manner, the Generator and the Battery in observance of generator power factor and loading factor or both currents, so that Generator and Storage Battery will jointly drive the Load Motor or other loads, and eventually switch to function (2) described hereinbefore where the load has reduced with the loading factor downgraded to a level below the Generator power factor, but reverting to Prime Function running in operation where the Load Factor reaches a level that is greater than the Generator Generation Factor;
(4) the ability to verify load current status of the Load Motor when driven by the Battery alone, such that once the power factor of the Load Motor or other rises to a level beyond the set value or beyond the set time, engine and generator are automatically driven to operation meanwhile the modus operandi programmed in the Central Control Unit will function to bring about operation under fixed current, or controlled current, or fixed power rate, or controlled power rate, in an effort to drive the load jointly with the Storage Battery, moreover, operation of Engine Dynamo will be stopped, followed by continued supply of power from Storage Battery to the Load Motor or other Load once Load Motor or other Load power factor resumes normal rating beyond a predetermined time;
(5) the ability to drive engine and generator duly in response to manipulation of Manual Control so that Generator with its output may singly drive the Load Motor or other Load, and that once load charged upon the Load Motor escalates potential stored in the Battery may jointly drive the load with Generator produced potential, and further that, once Motor Load resumes normal, Battery will stop outputting power so that the load is driven instead by power coming from Engine Dynamo;
(6) the ability to accept manipulation from the Manual Control Unit so as to initiate Engine and Dynamo for fixed current, controlled current, or else fixed power rate, or control led power rate generation, so as to drive Load Motor and charge storage battery in a manner proportional to the matched generation power rate and load rate or alternatively to current in both cases just as matched too, with it being made possible to switch automatically to function mode (7) once the load is aggravated to a level beyond Generator generation power rate, but reverting to prime functional running once the load factor turns to a level inferior to the same generation power rate;
(7) the ability to accept manipulation from the Manual Control Unit so as to initiate Engine and Dynamo for fixed current, controlled current, or else fixed power rate, or controlled power rate generation, so as to charge Dynamo and Battery to jointly drive the Load Motor or other Load pursuant to generation power, loading power, or current in both cases in proportionate distribution, also that the operation will turn to function under function (6) when the load is reduced and the loading power is less than the generation power, but revert to prime function mode when the load power exceeds the generation power rate;
(8) the ability to accept manipulation from Manual Control Unit so as to initiate Engine and Dynamo to individually charge with respect to the Battery;
(9) the ability to accept manipulation from Manual Control Unit so as to initiate Engine and Dynamo to individually program charging times to limit charging currents to the Battery, power factor to the Battery, and to trigger suspension of charging to Engine Dynamo, control of charging time in this connection includes supplemental charging of saturation charging, or emergency charging, as partially applied charging, to the Battery;
(10) the provision to stop operation of Engine Dynamo set as the Battery reaches predetermined saturation, as determined in the course of operation under aforementioned function (1) , (8) , or (9) ;
(11) the provision to stop charging with respect to the Battery without affecting power being output from Engine Dynamo to Load Motor through manipulation either of Manual Control Unit or Else of-Central Control Unit once the Battery reaches a predetermined saturation point, verified in the course of operation run under function (2) or (6) hereinbefore;
(12) the provision to stop operation of Engine Dynamo so that power output be delivered to Load Motor way from the Battery through manipulation either of Manual Control Unit or else of Central Control Unit once the Battery reaches a predetermined saturation point, verified in the course of operation run under function (2) or 6) hereinbefore;
(13) the provision for the Engine Dynamo to continue operation concurrently with the Battery shifting from a charging status to jointly deliver input power with Dynamo to the Load Motor through manipulation either or Manual Control Unit or else of Central Control Unit once the Battery reaches a predetermined saturation point, verified in the course of operation run under function (2) or (6) hereinbefore;
(14) the provision to relatively regulate Generators generation power rate basing on the charging current signal incoming as a result of the testing conducted when the Generator solely charges the Battery or concurrently delivers power to the Load Motor while charging the Battery at the same time, in a course of operation under function (1) , (2), (6), (8), (9) hereinbefore;
(15) Surveillance of peripheral harmful gases: to test the concentration of peripheral harmful gases, so that, once a critical value is exceeded charging will be stopped, other functional operation stopped forthwith, and restarting be made once the reading shall have dropped to a level below the critical one, the testing being conducted when charging is run under automatic or manual transmission, or alternatively other functional operation is in progress, by means of a Harmful Gas Detector;
(16) Surveillance of ambient temp.: by monitoring of ambient temp, detector, to stop charging or other operation when the temp, exceeds a predetermined value while allowing other modes of operation within normal temp. range, but such that Engine and Generator be transmitted automatically when the temp, drops too low or in a shutdown status, so as to maintain a sustaining charging for the Battery so that the latter is maintained in ready to serve condition in all eventualities.

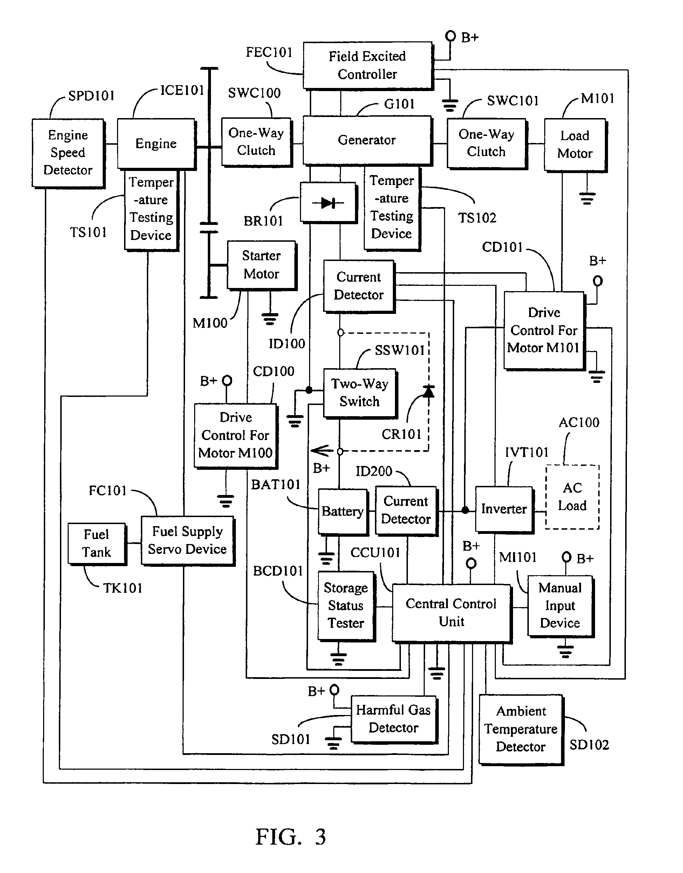

When the subject System of Automatic Surveillant Revolving Storage Battery Auxiliary Charge is running under function (2) or (6) , with output power of Generator G 101 in parallel with Battery BAT 101 straight, disparity in Battery Saturation status will have the effect such that Generator G 101 forms a surge charging with respect to Battery BAT 101 when the Battery is at a relatively lower capacity level, it is then time to operate by means ofthe following control ckts comprising:
- the arrangement for a forward series blocking diode CR 101 to be connected to the output terminal of BAT 101, which is set parallel with the D.C. Output terminal outgoing from the D.C, or A.C. rectification of Generator G 101, across both ends of diode CR 101 is paralleled a Regulator RG 101, so that RG 101 is made active to regulate power that is charged way from Generator to the Battery; RG 101 may be further adapted to be receptor to control signals emitted from CCU 101 basing on the test outcome from Battery Storage Detector BCD 101 so as to allow for regulation of charging rates or currents, and for control of start-up or stopping of charging functions as well;
- the arrangement for a blocking diode CR 101 connected in forward series to BAT 101, to thence form a parallel output with the D.C. output terminal following a D.C. or A.C. rectification of Generator G 101, such as is illustrated in Fig. 1;
- the arrangement for a blocking diode CR 101 to be serially forward-connected to the output terminal of BAT 101, to thence form a paralleled output with the D.C. output terminal resultant from the D.C. or A.C. rectification of Generator G 101, with a resistive or conductive or composite resistive/conductive impedance Z 101 put in parallel connection across both ends of the blocking diode (see Fig. 20) in lieu of the proper functioning or Regulator RG 101 to restrict the charging of currents way from the Generator to the Battery:
- the connection in forward series sense of a blocking diode CR 101 at the output end of BAT 101, to form a parallel output across the D.C. output end following D.C. or A.C. rectification of Generator G 101, while both ends of blocking diode CR 101 may be further(see Fig. 3) paralleled with a mechanic or solid state controllable two-way switch SSW 101 to permit an open ckt or close ckt alteration control across the output terminals of both BAT 101 and Generator G 101 in lieu of the proper functioning of Regulator RG 101, that in turn to allow control of the charging status way from Generator G 101 to BAT 101, and ofthe output status of BAT 101 to Load Motor M 101;
- the arrangement for the block diode CR 101 connected in forward series sense to the output end of BAT 101, and the output end of a series diode CR 101 in forward connection to BAT 101, by way of which D.C. power is supplied from Generator G 101 that is governed by Regulator RG 101, or alternatively an impedance element Z 101 bearing the same function or else a controllable two-way switch SSW 101, to be of the same polarity altogether, while that end coming from the power terminal of Generator, connected to the output end of a Common contact (COM) diode CR 101 in common with SSW 102 in command of point C may, as dictated by ckt, requirement, be severally connected to the NO point and NC point of the SSW 102 in command of point C, or alternatively a reversal of such a connection is granted so as to render possible control by Generator G101 of the output status of the charging status of Battery, and that of the Battery to the Load Motor M 101 or other load; In addition, in the subject System of Automatic Surveillant Revolving Storage Battery Auxiliary Charge , factors including the engine sets for the transmission of Generators having to maintain in operation in various ambient temp. conditions, that the engines having, as a rule, to be warmed up prior to routine operation, all the more so in winter times, that heat accumulated during operation having to be radiated, have obliged this system to operation under CCU condition or Manual mode of operation including:
- the restriction for Generator to yield output after Engine has been initiated for some time, that is, generator output is necessarily lagging behind engine initiation;
- while the system is running continuously in operation, the Engine Set must be maintained at idle running warmup condition when no output of power comes from the Generator, so as to get prepared for output operation;
- while the entire system stops operation, the Engine Generator must continue in heat dissipation running so as to prevent accumulation of heat in the Engine, and upon completion of heat dissipation running, stop running altogether;
- While the system runs in operation, Engine Generator must be subjected to control effected from Temp. Testing Device TS 101 located in the Engine or that Temp. Testing Device TS 102 located in the Generator, so that engine rotation is stopped when the temp, is found to exceed a predetermined level, or alternatively is made to yield lesser power output;
- while the system is running in operation, when due to manipulation of Manual Control or CCU automatic control, Engine is set to a preparatory status or System comes to a prepare-to-stop condition, the Engine Set will be driven to intermittent operation, basing on the engine temp, that is predetermined in the CCU, so as to maintain a preparatory state advantageous to temp, initiation;
- Engine Kinetics as related to Engine Generator Set, more than just for transmission of Generator, may serve to transmit cooling or heating temp, regulator of the pump type and driven by mechanic energy or else other peripheral devices transmittable by revolving mechanic drives which may at the same time, as dictated by requirements, be selectively equipped with electric motor drive devices, and to be driven by engine kinetics capable of transmitting clutches or incorporating one-way clutches;
- provision of a one-way transmission clutch SWC 100 way between Engine Set ICE 101 and Generator G 101, with one-way transmission clutch SWC 101 installed in-between Generator G 101 and Load Motor M 101 output end or the Load, with the load, while exerting inertial idle running in one direction, capable of driving Generator G101, so that Generator G 101 is made possible to realize braking action owing to recycled generation while the one-way transmission clutch SWC 100 is idle running; when Engine Set ICE 101 drives Generator G 101 to operation, one-way transmission clutch SWC 101 will be idle running; said one-way transmission clutch may very well be replaced with artificial or mechanical or power driven or fluid powered clutching devices or come as a version of combination thereof, while clutch in a disengaged status is equivalent to a one-way clutch in an idle running status, whereas clutch in a closure state amounts to a one-way clutch in a disengaged state.

By way of the subject System of Automatic Surveillant Revolving Storage Battery Auxiliary Charge described in the foregoing it is made possible to put the Storage Battery in a power storage condition that is better and more desirable than what is possible ever before to date, serving not only to go in favour of loading system operation, but also to avoid over-discharging the Storage Battery, thus achieving eventually the ultimate goal of prolonging service life of the Battery Assembly at the large.

### Additional Features

1. A System of Automatic Surveillant Revolving Storage Battery Auxiliary Charge is essentially designed to maintain Storage Battery in adequately charged condition by using Engine Dynamo as its power supply, so as to offer timely auxiliary charging to transmit a Load Motor or otherwise loads, or still to stationary or carrier-laden batteries. In operation, testing measurement is made, basing on manual control modes, or else on Central Control Unit programmed for the purpose, considering battery storage condition, with respect to the battery and with the testing signals thus obtained compared with aforementioned control or programmed value, to effect commensurate controlled operation of Engine Driven Generator Set, incorporating optionally various functions including any or all of the following:
   (1) the ability to charge and initiate motor and engine Generator exclusively by charging the Battery when against testing of the Battery Saturation State, the Battery storage is confirmed to have fallen down to preset level;
   (2) the ability to deliver power to the Load Motor or other loads and Storage Battery, basing on the result of testing of Storage Battery Saturation State signal, by striking a comparison of the modes of operation programmed in the Central Control Unit, followed with outputting of rated or ratable power or else of fixed current or controlled current by correspondent control of the Generator whereby loading factor is matched or through proportionate apportioning of currents supplied to both, with it being made possible to switch automatically to function (3) described hereinafter where the load aggravated accordingly has exceeded Generator's generation factor, but switching back to prime operation regime when the load factor drops to a level below the Generator Generation power factor;
   (3) the ability to effect relative control of the Generator for fixed current or controlled current output, or else for fixed power factor, or controlled power factor output, basing on the current storage condition of the storage battery, so as to apportion, in a controlled manner, the Generator and the Battery in observance of generator power factor and loading factor or both currents, so that Generator and Storage Battery will jointly drive the Load Motor or other loads, and eventually switch to function (2) described hereinbefore where the load has reduced with the loading factor downgraded to a level below the Generator power factor, but reverting to Prime Function running in operation where the Load Factor reaches a level that is greater than the Generator Generation Factor;
   (4) the ability to verify load current status of the Load Motor when driven by the Battery alone, such that once the power factor of the Load Motor or other rises to a level beyond the set value or beyond the set time, engine and generator are automatically driven to operation meanwhile the modus operandi programmed in the Central Control Unit will function to bring about operation under fixed current, or controlled current, or fixed power rate, or controlled power rate, in an effort to drive the load jointly with the Storage Battery, moreover, operation of Engine Dynamo will be stopped, followed by continued supply of power from Storage Battery to the Load Motor or other Load once Load Motor or other Load power factor resumes normal rating beyond a predetermined time;
   (5) the ability to drive engine and generator duly in response to manipulation of Manual Control so that Generator with its output may singly drive the Load Motor or other Load, and that once load charged upon the Load Motor escalates potential stored in the Battery may jointly drive the load with Generator produced potential, and further that, once Motor Load resumes normal, Battery will stop outputting power so that the load is driven instead by power coming from Engine Dynamo;
   (6) the ability to accept manipulation from the Manual Control Unit so as to initiate Engine and Dynamo for fixed current, controlled current, or else fixed power rate, or control led power rate generation, so as to drive Load Motor and charge storage battery in a manner proportional to the matched generation power rate and load rate or alternatively to current in both cases just as matched too, with it being made possible to switch automatically to function mode (7) once the load is aggravated to a level beyond Generator generation power rate, but reverting to prime functional running once the load factor turns to a level inferior to the same generation power rate;
   (7) the ability to accept manipulation from the Manual Control Unit so as to initiate Engine and Dynamo for fixed current, controlled current, or else fixed power rate, or controlled power rate generation, so as to charge Dynamo and Battery to jointly drive the Load Motor or other Load pursuant to generation power, loading power, or current in both cases in proportionate distribution, also that the operation will turn to function under function (6) when the load is reduced and the loading power is less than the generation power, but revert to prime function mode when the load power exceeds the generation power rate;
   (8) the ability to accept manipulation from Manual Control Unit so as to initiate Engine and Dynamo to individually charge with respect to the Battery;
   (9) the ability to accept manipulation from Manual Control Unit so as to initiate Engine and Dynamo to individually program charging times to limit charging currents to the Battery, power factor to the Battery, and to trigger suspension of charging to Engine Dynamo, control of charging time in this connection includes supplemental charging of saturation charging, or emergency charging, as partially applied charging, to the Battery;
   (10) the provision to stop operation of Engine Dynamo set as the Battery reaches predetermined saturation, as determined in the course of operation under aforementioned function (1), (8), or (9);
   (11) the provision to stop charging with respect to the Battery without affecting power being output from Engine Dynamo to Load Motor through manipulation either of Manual Control Unit or Else of Central Control Unit once the Battery reaches a predetermined saturation point, verified in the course of operation run under function (2) or (6) hereinbefore;
   (12) the provision to stop operation of Engine Dynamo so that power output be delivered to Load Motor way from the Battery through manipulation either of Manual Control Unit or else of Central Control Unit once the Battery reaches a predetermined saturation point, verified in the course of operation run under function (2) or (6) hereinbefore;
   (13) the provision for the Engine Dynamo to continue operation concurrently with the Battery shifting from a charging status to jointly deliver input power with Dynamo to the Load Motor through manipulation either or Manual Control Unit or else of Central Control Unit once the Battery reaches a predetermined saturation point, verified in the course of operation run under function (2) or (6) hereinbefore;
   (14) the provision to relatively regulate Generators generation power rate basing on the charging current signal incoming as a result of the testing conducted when the Generator solely charges the Battery or concurrently delivers power to the Load Motor while charging the Battery at the same time, in a course of operation under function (1), (2), (6), (8), (9) hereinbefore;
   (15) Surveillance of peripheral harmful gases: to test the concentration of peripheral harmful gases, so that once a critical value is exceeded charging will be stopped, other functional operation stopped forthwith, and restarting be made once the reading shall have dropped to a level below the critical one, the testing being conducted when charging is run under automatic or manual transmission, or alternatively other functional operation is in progress, by means of a Harmful Gas Detector;
   (16) Surveillance of ambient temp.: by monitoring of ambient temp, detector, to stop charging or other operation when the temp, exceeds a predetermined value while allowing other modes of operation within normal temp, range, but such that Engine and Generator be transmitted automatically when the temp, drops too low or in a shutdown status, so as to maintain a sustaining charging for the Battery so that the latter is maintained in ready to serve condition in all eventualities.
   By virtue of the subject System of Automatic Surveillant Revolving Storage Battery Auxiliary Charge described in the foregoing it is made possible to put the Storage Battery in a power storage condition that is better and more desirable than what is possible ever before to date, serving not only to go in favour of loading system operation, but also to discharging the Storage Battery, thus achieving eventually the ultimate objective of prolonging service life of the Battery Assembly at large.
2. The engine driven, System of Automatic Surveillant Revolving Storage Battery Auxiliary Charge according to feature 1, comprising essentially:
   - Battery BAT 101 : which is basically a secondary Battery capable of repeated charging/discharging recycling operation, which can be , for example, a battery of the plumbous acid, nickel/cadmium, nickel/nitrogen, or nickel/zinc structure or else of the lithium system, or still of the zinc system or otherwise secondary battery system;
   - Storage Status Tester BCD 101: which is provided to conduct continuous or periodical testing or else to convert to digital or analogue power signal output for comparisons using relevant charging or discharging, or static loading errors followed by a correction process, and comprises mechanic or solid state electronic elements which form analogue testing ckts, or alternatively digital testing ckts consisting of microprocessors and relevant software, interfacing electronic elements, or else a combination of both executions;
   - Regulator RG 101: composed of mechanic or solid state electronic elements, optional contingent on system requirements, which, by referencing output voltage/current from Generator G 101, or alternatively receiving instructions coming from Central Control Unit CCU 101, feeds back output power to the Prime Generator G 101;
   - Current Detector ID 100: connected in series to the output terminal of Generator G 101, with current sampling means comprising resistive or conductive elements or else magnetic field sensors, or still means of the heat cumulation or electromagnetic effect type capable of yielding current testing values to be converted into analogue signals with which to produce an output current for the Generator G 101 being tested or input current under specific conditions, by which to control, regulate the Regulator RG 101, or else to be fed to CCU 101, so as to control in turn the operation condition of Generator G101, which is also an optional choice;
   - Current Detector ID 200: seriesly connected between input/output terminals of Battery BAT 101 and the Transmission Control CD 101 or Rectifier IVT 101; with current sampling means comprising purely resistive element or conductive element or a combination of both, or else elements may be sensed, tested by the strength of magnetic fields, or else composed of devices capable of producing analoguy signals by the measured currents of the heat cumulation type or magnetic effect testing type, meant to test the output or input current of the Battery to be tested, then fed to the Drive Control CD 101 or CCU 101, so as to control in suit the output power BAT 101, which is also an optional choice;
   - Engine Set ICE 101: Revolving or Reciprocating Internal Combustion Engine using gasoline or Diesel oil or gas or other fluid fuel for conversion into dynamic power for output purpose;
   - Generator G 101: comprising armatured or unarmatured mechanism, D.C. or A.C., to convert the incoming Engine Revolving Power into A.C. or D.C. power, or in the case of A.C. power, to convert same through rectification at rectifier B 101 into D.C. output to drive load motor M 101 and to charge the Batteries;
   - Rectifier BR 101: to convert by rectifying single phase or multiple phase A.C. power into D.C. Power in dealing with A.C. Dynamos, an optional choice depending upon system requirements;
   - Field excited Control FEC 101: composed of mechanic or solid state elements, to control the power outcoming from A.C. or D.C. Generator comprising field Excited Windings, basing on Generator Output Status and the Manual Control Device MI 101 and CCU 101 settings, so as to achieve in regulatory control of voltage, current or power rate, this feature to be saved where the Generator Pole is of a permanent magnet type;
   - Engine Speed Detector SPD 101: analoguy or digital in execution, capable or converting angular displacements into correspondent electric signals in electromagnetic or photoelectric forms so as to feed engine speed signals to CCU 101, and consequently regulate the feed of fuel way from Servomechanism FC 101 to Engine Set, while signal value of this device can also be substituted by the analogous voltage or frequency value as the case may be; this Engine Speed Detector SPD 101 can also be made to consist of mechanical structure, such as, for example, Centrifugal Testing Structure or otherwise mechanical structure, and made in mechanical interaction with fuel supply Servomechanism FC 101 so as to bring Engine Set ICE 101 into fixed speed rotation, both executions disclosed hereinbefore are to be adopted depending on the nature of the system involved, and the device on top of that, is an optional choice contingent on system requirements;
   - Transmission Motor M 100: composed of an electric structure synchronous or asynchronous, A.C. or D.C., armatured or unarmatured, to receive input power so as to produce revolving power to initiate in turn the Engine Set ICE 101;
   - Fuel Supply Servo Device FC 101: to receive electric power servo instructions or alternatively mechanic interaction, structured so as to control the fuel supply to Engine Set ICE 101, and that in turn to regulate rotation speed and torsion on the part of Engine Set ICE 101, both executions optionable contingent on system makeup;
   - Fuel Tank TK 101: where engine fuel is stored, to control fuel supplied to Engine Set ICE 101 by means of Fuel Line and Fuel Supply Servo Device FC 101 interconnected therebetween;
   - Drive Control CD 100: composed essentially of Mechanical or solid state power elements and associated ckts., to drive Startup Motor into operation or else to stop its operation;
   - Drive Control CD 101: composed of mechanical or solid state elements and relevant ckts, to control the Load Motor M 101 for forward/reverse rotation, speed regulation, startup and stop functioning, in respect of which the quantity to be supplied is contingent on system requirements;
   - Load Motor M 101: composed of A.C. or D.C., armatured or inarmatured, synchronous or asynchronous Motor, realizing forward rotation, reverse rotation, speed regulation, operation, and stopping and such like functions so as to transmit a load, the Load Motor M 101 may also be made to consist of other loads in respect of which the quantity of installation is dictated by system requirements;
   - Auxiliary Power Supply B+ : with power sourced to Battery BAT 101 in the system, or with an additionally provided Battery Set serving as the Auxiliary Power Supply or as derived from Dynamo Generation, and that in an effort to offer power supply to the Central Control Unit CCU 101, or Manual Control Unit MI 101, or the Drive Control CD 101 to Load Motor M 101, or else to Harmful Gas Detector SD101, or Drive Control CD 101 to Startup Motor M 100, or to Field Excited Control EFC 101, or still Regulator RG 101, or still else such as lighting facilities for functioning, where Auxiliary Battery is provided, the Generator may be additionally furnished with correspondent Generation Windings to facilitate charging of the auxiliary battery;
   - D.C. to A.C. Invertor IVT 101: composed of solid state power rate elements and associated ckts, to convert D.C. power into A.C. power so as to empower A.C. loads, in respect of which the quantity to be supplied is contingent on system requirements;
   - Central Control Unit CCU 101: composed of mechanical or solid state elements which form alternatively analoguy or digital structure or a combined structure of both executions; or still else of microprocessor comprising operation and control softwares, D-A converter, A-D converter or other relevant ckt elements, with internal operation modes set with instructions coming from Manual Control Device MI 101 or feedback signals so as to govern interactions between Generator G 101, Battery BAT 101, Load Motor M 101 or other loads in the control system, as well as other associated devices for a regulated operation;
   - Manual Control Device MI 101: composed singly of mechanic or solid state elements in analogy mode or digital mode as separate from or else composite with each other, for feeding to the Central Control Unit so as to control the overall system operation , in respect of which the quantity to be installed is dependent on system requirements;
   - Harmful Gas Detector SD 101: provided to detect the concentration of harmful gases, if any, in the surrounding environments when the charging is in progress, made to the Engine, whether in Manual Control Mode or in Automatic Mode of activation, and the operation will be stopped where the concentration as detected exceeds a safety margin, but allowed for continued operation where the reading detected falls within tolerance, in respect of which the quantity for installation is dictated by system requirements;
   - Ambient Temp. Detector SD 102 : composed of temp. sensors, plus mechanic or solid state components, intended for automatic detection of ambient temperatures, and with the equivalent electric power signal detected transmitted to CCU 101, so that charging may be suspended, other forms of operation stopped when the ambient temp. thus identified exceeds a given threshold value, whereas continued system operation is allowed where the ambient temp. is found to be within rated working temp, ranges; in respect of which the quantity to be supplied is dependent on system requirements, and the provision, on top of that, is an optional choice.
3. System of Automatic Surveillant Revolving Storage Battery Auxiliary Charge according to feature 1 or 2, complete with a Control ckt comprising:
   - the arrangement for a forward series blocking diode CR101 to be connected to the output terminal of BAT 101, which is set parallel with the D.C. Output terminal outgoing from the D.C, or A.C. rectification of Generator G 101, across both ends of diode CR 101 is paralleled a Regulator RG 101, so that RG 101 is made active to regulate power that is charged way from Generator to the Battery; RG 101 may be further adapted to be receptor to control signals emitted from CCU 101 basing on the test outcome from Battery Storage Detector BCD 101 so as to allow for regulation of charging rates or currents, and for control of startup or stopping of charging functions as well;
4. System of Automatic Surveillant Revolving Storage Battery Auxiliary Charge according to feature 1 or 2, complete with a Control ckt comprising:
   - the arrangement for a blocking diode CR 101 connected in forward series to BAT 101, to thence form a parallel output with the D.C. output terminal following a D.C. or A.C. rectification of Generator G 101.
5. System of Automatic Surveillant Revolving Storage Battery Auxiliary Charge according to feature 1or 2, complete with a Control ckt comprising:
   - the arrangement for a blocking diode CR 101 to be serially forward-connected to the output terminal of BAT101, to thence form a paralleled output with the D.C. output terminal resultant from the D.C. or A.C. rectification of Generator G 101, with a resistive or conductive or composite resistive/conductive impedance Z 101 put in parallel connection across both ends of the blocking diode (see Fig. 20) in lieu of the proper functioning or Regulator RG 101 to restrict the charging of currents way from the Generator to the Battery:
6. System of Automatic Surveillant Revolving Storage Battery Auxiliary Charge according to feature 1 or 2, complete with a Control ckt comprising:
   - the connection in forward series sense of a blocking diode CR 101 at the output end of BAT 101, to form a parallel output across the D.C. output end following D.C. or A.C. rectification of Generator G 101, while both ends of blocking diode CR 101 may be further paralleled with a mechanic or solid state controllable two-way switch SSW 101 to permit an open ckt or close ckt alteration control across the output terminals of both BAT 101 and Generator G 101 in lieu of the proper functioning of Regulator RG101, that in turn to allow control of the charging status way from Generator G 101 to BAT 101, and of the output status of BAT 101 to Load Motor M 101;
7. System of Automatic Surveillant Revolving Storage Battery Auxiliary Charge according to feature 1 or 2, complete with a Control ckt comprising:
   - the arrangement for the block diode CR 101 connected in forward series sense to the output end of BAT 101, and the output end of a series diode CR 101 in forward connection to BAT 101, by way of which D.C. power is supplied from Generator G 101 that is governed by Regulator RG 101, or alternatively an impedance element Z 101 bearing the same function or else a controllable two-way switch SSW 101, to be of the same polarity altogether, while that end coming from the power terminal of Generator, connected to the output end of a Common contact (COM) diode CR 101 in common with SSW 102 in command of point C may, as dictated by ckt, requirement, be severally connected to the NO point and NC point of the SSW 102 in command of point C, or alternatively a reversal of such a connection is granted so as to render possible control by Generator G 101 of the output status of the charging status of Battery, and that of the Battery to the Load Motor M 101 or other load;
8. System of Automatic Surveillant Revolving Storage Battery Auxiliary Charge according to feature 1 or 2, capable of operating under Central Control Unit setting or alternatively Manual Control, and **characterized in that:**
   - the restriction for Generator to yield output after Engine has been initiated for some time, that is, generator output is necessarily lagging behind engine initiation;
9. System of Automatic Surveillant Revolving Storage Battery Auxiliary Charge according to feature 1 or 2, capable of operating under Central Control Unit setting or alternatively Manual Control, and **characterized in that:** -while the system is running continuously in operation, the Engine Setmust be maintained at idle running warnup condition when no output of power comes from the Generator, so as to get prepared for output operation;
10. System of Automatic Surveillant Revolving Storage Battery Auxiliary Charge according to feature 1 or 2, capable of operating under Central Control Unit setting or alternatively Manual Control, and **characterized in that**:
   - while the entire system stops operation, the Engine Generator must continue in heat dissipation running so as to prevent accumulation of heat in the Engine, and upon completion of heat dissipation running, stop running altogether;
11. System of Automatic Surveillant Revolving Storage Battery Auxiliary Charge according to feature 1 or 2, capable of operating under Central Control Unit setting or alternatively Manual Control, and **characterized in that**:
   - While the system runs in operation, Engine Generator must be subjected to control effected from Temp. Testing Device TS 101 located in the Engine or that Temp. Testing Device TS 102 located in the Generator, so that engine rotation is stopped when the temp, is found to exceed a predetermined level, or alternatively is made to yield lesser power output;
12. System of Automatic Surveillant Revolving Storage Battery Auxiliary Charge according to feature 1or 2, capable of operating under Central Control Unit setting or alternatively Manual Control, and **characterized in that**:
   - while the system is running in operation, when due to manipulation of Manual Control or CCU automatic control, Engine is set to a preparatory status or System comes to a prepare-to-stop condition, the Engine Set will be driven to intermittent operation, basing on the engine temp, that is predetermined in the CCU, so as to maintain a preparatory state advantageous to temp, initiation;
13. System of Automatic Surveillant Revolving Storage Battery Auxiliary Charge according to feature 1 or 2, whereof engine kinetics as related Engine Generator Set, more than just for transmission of Generator, may serve to transmit cooling or heating temp .regulator of the pump type and driven by mechanic energy or else other peripheral devices transmittable by revolving mechanic drives which may at the same time, as dictated by requirements, be selectively equipped with electric motor drive devices, and to be driven by engine kinetics capable of transmitting clutches or incorporating one-way clutches;
14. System of Automatic Surveillant Revolving Storage Battery Auxiliary Charge according to feature 1or 2, whereof there is provided a one-way transmission clutch SWC 100 way between engine Set ICE 101 and Generator G 101, with one-way transmission clutch SWC 101 installed in-between Generator G 101 and Load Motor M 101 output end or the Load, with the load, while exerting inertial idle running in one direction, capable of driving Generator G1 01, so that Generator G 101 is made possible to realize braking action owing to recycled generation while the one-way transmission clutch SWC 100 is idle running, when Engine Set ICE 101 drives Generator G 101 to operation, one-way transmission clutch SWC 101 will be idle running; said one-way transmission clutch may very well be replaced with artificial or mechanical or power driven or fluid powered clutching devices or come as a version of combination thereof, while clutch in a disengaged status is equivalent to a one-way clutch in an idle running status, whereas clutch in a closure state amounts to one-way clutch in a disengaged state.

## Claims

1. An electric power source for supplying electric power to a load, the power source comprising:
a storage battery(BAT101);
an engine (ICE101);
a generator (G101) drivable by the engine (ICE101) to generate electric power for charging the battery (BAT101) and for supplying the load;
a controller which controls operation of the engine to supply electric power selectively to the battery (BAT101) and to the load, and which controls the proportion of electrical power supplied to the load by the battery (BAT101) and the generator (G101);
a storage status tester (BCD101) arranged to test for charging, discharging, or static loading errors during the repeated charging/discharging recycling operations;
a load motor (M101) capable of forwards rotation, reverse rotation, speed regulation, and stopping functions;
a current detector (ID 100) connected in series to an output terminal of the generator;
a current detector (ID200) connected in series to an output terminal of the storage battery (BAT101);
a field excited control (FECI01) arranged to regulate the electrical power from the generator (G101);
a fuel supply servomechanism (FC101) arranged to control the fuel supply to the engine, and thereby regulate engine rotation speed and torque;
a starter motor (M100) arranged to generate rotational power to start the engine;
a starter motor drive controller (CD 100) arranged to drive the starter motor;
a load motor drive controller (CD 101) arranged to drive the load motor; a central control unit (CCU101) connected to the engine, the generator, the storage battery, the load motor, or other loads in the control system and arranged to respond to instructions from the manual control device and to feedback signals so as to govern interactions between the engine, the generator, the storage battery, the load motor, or other loads in the control system;
an engine speed detector (SPD101) arranged to convert angular displacement of the engine into engine speed signal which are fed to the central control unit (CCU101), and thereby regulate the supply of fuel from the fuel supply servomechanism to the engine;
a manual control device (MI 101) for feeding the central control unit so as to control the overall system operation;
an auxiliary power supply (B+) arranged to supply power to the central control unit, the manual control device, and the drive controllers;
**characterised in that** the central control unit (CCU101) is further arranged such that, if the load on the load motor (M101) increases such that the electric power driving the load motor (M101) exceeds a threshold value for a set time, it will operate to start the engine (ICE101) driving the generator (G101) to provide electric power to the load motor and will operate to stop the engine (ICE101) once the output power of the load motor (M101) resumes normal rating beyond a predetermined time.

2. An electric power source according to claim 1, further comprising a harmful gas detector arranged to detect the concentration of harmful gases in the surrounding environment such that operation of the engine is stopped when the detected concentration exceeds a safety margin, but that operation re-starts once it falls below the safety margin.

3. An electric power source according to claim 2, wherein the central control unit is arranged to start the engine (ICE101) when the current detected by the current detector (ID200) exceeds a fixed current while the load motor is powered by the battery (BAT101) alone, so that the load is powered jointly by the battery (BAT101) and by the engine (ICE 101) with the generator (G101).

4. An electric power source according to any one of the preceding claims, further comprising:
an ambient temperature detector (SD102) arranged for automatically detecting ambient temperatures, with its output transmitted to the central control unit;
wherein, when the load motor (M101) is driven by the storage battery (BAT101) alone, the central control unit (CCU101) is arranged such that, if the load on the load motor (M101) increases such that the electric power driving the load motor (M101) exceeds a threshold value and a set time, it will operate to start the engine (ICE101) driving the generator (G101) to provide electric power to the load motor (M101) jointly with the storage battery (BAT101);
wherein the electric power source further comprises a field excited control (FECI01) arranged to regulate the electrical power from the generator (G101);
wherein the central control unit (CCU101) suspends charging, and stops other forms of operation, when the ambient temperature exceeds a given threshold value, and so that continued system operation is allowed where the ambient temperature is found to be within a predetermined working temperature range.

5. An electric power source according to claim 1, arranged to maintain the storage battery (BAT101) in adequately charged condition by using the engine dynamo as its power supply, so as to offer timely auxiliary charging to transmit a load motor or otherwise loads, or still to stationary or carrier-laden batteries; wherein in operation, testing measurement is made, basing on manual control modes, or else on the central control unit programmed for the purpose, considering battery storage condition, with respect to the battery and with the testing signals thus obtained compared with aforementioned control or programmed value, to effect commensurate controlled operation of the engine driven generator set, incorporating optionally various functions including any or all of the following:
(1) the ability to charge and initiate motor and engine, the generator exclusively by charging the battery (BAT101) when, against testing of the battery saturation state, the battery storage is confirmed to have fallen down to preset level;
(2) the ability to deliver power to the load motor or other loads and the storage battery, basing on the result of testing of the storage battery saturation state signal, by striking a comparison of the modes of operation programmed in the central control unit, followed with outputting of rated or ratable power or else of fixed current or controlled current by correspondent control of the generator whereby loading factor is matched or through proportionate apportioning of currents supplied to both, with it being made possible to switch automatically to function (3) where the load aggravated accordingly has exceeded the generators generation power factor, but switching back to prime operation regime when the load factor drops to a level below the generator generation power factor;
(3) the ability to effect relative control of the generator for fixed current or controlled current output, or else for fixed power factor, or controlled power factor output, basing on the current storage condition of the storage battery, so as to apportion, in a controlled manner, the generator and the battery in observance of generator power factor and loading factor or both currents, so that the generator and the storage battery will jointly drive the load motor or other loads, and eventually switch to function (2) where the load has reduced with the loading factor downgraded to a level below the generator power factor, but reverting to prime function running in operation where the load factor reaches a level that is greater than the generator generation factor;
(4) the ability to verify load current status of the load motor when driven by the battery alone, such that once the power factor of the load motor or other rises to a level beyond the set value or beyond the set time, engine and generator are automatically driven to operation meanwhile the modus operandi programmed in the central control unit will function to bring about operation under fixed current, or controlled current, or fixed power rate, or controlled power rate, in an effort to drive the load jointly with the storage battery, moreover, operation of engine dynamo will be stopped, followed by continued supply of power from the storage battery to the load motor or other load once the load motor or other load power factor resumes normal rating beyond a predetermined time;
(5) the ability to drive engine and generator duly in response to manipulation of manual control so that the generator with its output may singly drive the load motor or other load, and that once load charged upon the load motor escalates potential stored in the battery may jointly drive the load with generator produced potential, and further that, once the motor load resumes normal, the battery will stop outputting power so that the load is driven instead by power coming from the engine dynamo;
(6) the ability to accept manipulation from the manual control unit so as to initiate the engine and dynamo for fixed current, controlled current, or else fixed power rate, or control load power rate generation, so as to drive the load motor and charge storage battery in a manner proportional to the matched generation power rate and load rate or alternatively to current in both cases just as matched too, with it being made possible to switch automatically to function mode (7) once the load is aggravated to a level beyond the generator generation power rate, but reverting to prime functional running once the load factor turns to a level inferior to the same generation power rate;
(7) the ability to accept manipulation from the manual control unit so as to initiate the engine and dynamo for fixed current, controlled current, or else fixed power rate, or controlled power rate generation, so as to charge the dynamo and battery to jointly drive the load motor or the other load pursuant to generation power, loading per, or current in both cases in proportionate distribution, also that the operation will turn to function under function (6) when the load is reduced and the loading power is less than the generation power, but revert to prime function mode when the load power exceeds the generation power rate;
(8) the ability to accept manipulation from the manual control unit so as to initiate the engine and dynamo to individually charge with respect to the battery;
(9) the ability to accept manipulation from manual control unit so as to initiate the engine and dynamo to individually program charging times to limit charging currents to the battery, power factor to the battery, and to trigger suspension of charging to the engine dynamo, control of charging time in this connection includes supplemental charging of saturation charging, or emergency charging, as partially applied charging, to the battery;
(10) the provision to stop operation of the engine dynamo set as the battery reaches predetermined saturation, as determined in the course of operation under function (1), (8), or (9);
(11) the provision to stop charging with respect to the battery without affecting power being output from the engine dynamo to the load motor through manupilation either of the manual control unit or else of the central control unit once the battery reaches a predetermined saturation point, verified in the course of operation run under function (2) or (6);
(12) the provision to stop operation of the engine dynamo so that power output be delivered to the load motor way from the battery through manipulation either of the manual control unit or else of the central control unit once the battery reaches a predetermined saturation point, verified in the course of operation run under function (2) or (6);
(13) the provision for the engine dynamo to continue operation concurrently with the battery shifting from a charging status to jointly deliver input power with the dynamo to the load motor through manipulation either or manual control unit or else of central control unit once the battery reaches a predetermined saturation point, verified in the course of operation run under function (2) or (6);
(14) the provision to relatively regulate the generator's generation power rate basing on the charging current signal incoming as a result of the testing conducted when the generator solely charges the battery or concurrently delivers power to the load motor while charging the battery at the same time, in a course of operation under function (1), (2), (6), (8), or (9);
(15) surveillance of peripheral harmful gases by testing the concentration of peripheral harmful gases, so that, once a critical value is exceeded charging will be stopped, other functional operation stopped forthwith, and restarting be made once the reading shall have dropped to a level below the critical one, the testing being conducted when charging is run under automatic or manual transmission, or alternatively other functional operation is in progress, by means of a harmful gas detector;
(16) surveillance of ambient temperature by monitoring of an ambient temperature detector, to stop charging or other operation when the temperature exceeds a predetermined value while allowing other modes of operation within normal temperature range, but such that the engine and generator be transmitted automatically when the temperature drops too low or in a shutdown status, so as to maintain a sustaining charging for the battery so that the latter is maintained in ready to serve condition in all eventualities; wherein a system of automatic surveillant revolving storage battery auxiliary charge is operable to put the storage battery in a power storage condition to discharge the storage battery, thereby prolonging the service life of the battery assembly.

6. An electric power source according to claim 5, the system of automatic surveillant revolving storage battery auxiliary charge comprising:
the battery (BAT 101) which further comprises a secondary battery capable of repeated charging/discharging recycling operation, which can be, for example, a battery of the plumbous acid, nickel/cadmium, nickel/nitrogen, or nickel/zinc structure or else of the lithium system, or still of the zinc system or otherwise secondary battery system;
the storage status tester (BCD 101) provided to conduct continuous or periodical testing or else to convert to digital or analoguy power signal output for comparisons using relevant charging or discharging, or static loading errors followed by a correction process, and comprises mechanic or solid state electronic elements which form analoguy testing circuits, or alternatively digital testing circuits consisting of microprocessors and relevant software, interfacing electronic elements, or else a combination of both executions;
a regulator (RG 101) composed of mechanic or solid state electronic elements, optional contingent on system requirements, which, by referencing output voltage/current from the generator (G 101), or alternatively receiving instructions coming from central control unit (CCU 101), feeds back output power to the prime generator (G 101);
a first current detector (ID 100) connected in series to the output terminal of the generator (G 101), with current sampling means comprising resistive or conductive elements or else magnetic field sensors, or still means of the heat cumulation or electromagnetic effect type capable of yielding current testing values to be converted into analogue signals with which to produce an output current for the generator (G 101) being tested or input current under specific conditions, by which to control, regulate the regulator (RG 101), or else to be fed to the central control unit (CCU 101), so as to control in turn the operation condition of generator (G101), which is also an optional choice;
a second current detector (ID 200) seriesly connected between input/output terminals of battery (BAT 101) and the transmission control (CD 101) or a rectifier (IVT 101); with current sampling means comprising purely resistive element or conductive element or a combination of both, or else elements may be sensed, tested by the strength of magnetic fields, or else composed of devices capable of producing analoguy signals by the measured currents of the heat cumulation type or magnetic effect testing type, meant to test the output or input current of the battery to be tested, then fed to the drive control (CD 101) or the central control unit (CCU 101), so as to control in suit the output power (BAT 101), which is also an optional choice;
the engine set (ICE 101) comprising a revolving or reciprocating internal combustion engine using gasoline or Diesel oil or gas or other fluid fuel for conversion into dynamic power for output purpose;
the generator (G 101) comprising an armatured or unarmatured mechanism, D.C. or A.C., to convert the incoming engine revolving power into A.C. or D.C. power, or in the case of A.C. power, to convert same through rectification at the rectifier (B 101) into D.C. output to drive load motor (M 101) and to charge the batteries;
the rectifier (BR 101) which converts by rectifying single phase or multiple phase A.C. power into D.C. Power in dealing with A.C. Dynamos, an optional choice depending upon system requirements;
the field excited control (FEC 101) composed of mechanic or solid state elements, to control the power outcoming from A.C. or D.C. generator comprising field excited windings, basing on generator output status and the manual control device (MI 101) and centre control unit (CCU 101) settings, so as to achieve in regulatory control of voltage, current or power rate, this feature to be saved where the generator pole is of a permanent magnet type;
the engine speed detector (SPD 101) which is an analogue or digital, capable or converting angular displacements into correspondent electric signals in electromagnetic or photoelectric forms so as to feed engine speed signals to centre control unit (CCU 101), and consequently regulate the feed of fuel way from the servomechanism (FC 101) to the engine set, the signal value of this device can also be substituted by the analogous voltage or frequency value; the engine speed detector (SPD 101) can consist of a mechanical structure, such as, for example, a centrifugal testing structure or otherwise mechanical structure, and made in mechanical interaction with fuel supply servomechanism (FC 101) so as to bring the engine set (ICE 101) into fixed speed rotation, both executions disclosed hereinbefore are to be adopted depending on the nature of the system involved, and the device on top of that, is an optional choice contingent on system requirements;
the starter motor (M 100) is composed of an electric structure synchronous or asynchronous, A.C. or D.C., armatured or unarmatured, to receive input power so as to produce revolving power to initiate in turn the engine set (ICE 101);
the fuel supply servo device (FC 101) is to receive electric power servo instructions or alternatively mechanic interaction, structured so as to control the fuel supply to engine set (ICE 101), and that in turn to regulate rotation speed and torsion on the part of the engine set (ICE 101), both executions optionable contingent on system makeup;
a fuel tank (TK 101) where engine fuel is stored, to control fuel supplied to the engine set (ICE 101) by means a of fuel line and the fuel supply servo device (FC 101) interconnected therebetween;
the starter motor drive control (CD 100) composed of mechanical or solid state power elements and associated circuits, to drive the starter motor into operation or else to stop its operation;
the load motor drive control (CD 101) composed of mechanical or solid state elements and relevant circuits, to control the load motor (M 101) for forward/reverse rotation, speed regulation, startup and stop functioning, in respect of which the quantity to be supplied is contingent on system requirements;
the load motor (M 101) composed of an A.C. or D.C., armatured or inarmatured, synchronous or asynchronous motor, realizing forward rotation, reverse rotation, speed regulation, operation, and stopping and such like functions so as to transmit a load, the load motor (M 101) may also be made to consist of other loads in respect of which the quantity of installation is dictated by system requirements;
the auxiliary power supply (B+) with power sourced to battery (BAT 101) in the system, or with an additionally provided battery set serving as the auxiliary power supply or as derived from dynamo generation, and that in an effort to offer power supply to the central control unit (CCU 101), or manual control unit (MI 101), or the drive control (CD 101) to the load motor (M 101), or else to the harmful gas detector (SD101), or drive control (CD 101) to the startup motor (M 100), or to the field excited control (EFC 101), or still regulator (RG 101), or still else such as lighting facilities for functioning, where auxiliary battery is provided, the generator may be additionally furnished with correspondent generation windings to facilitate charging of the auxiliary battery;
the D.C. to A.C. invertor (IVT 101) composed of solid state power rate elements and associated circuits, to convert D.C. power into A.C. power so as to empower A.C. loads, in respect of which the quantity to be supplied is contingent on system requirements;
the central control unit (CCU 101): composed of mechanical or solid state elements which form alternatively analoguy or digital structure or a combined structure of both executions; or still else of microprocessor comprising operation and control softwares, D-A converter, A-D converter or other relevant ckt elements, with internal operation modes set with instructions coming from the manual control device (MI 101) or feedback signals so as to govern interactions between the generator (G 101), the battery (BAT 101), the load motor (M 101) or other loads in the control system, as well as other associated devices for a regulated operation;
the manual control device (MI 101) is composed singly of mechanic or solid state elements in analogy mode or digital mode as separate from or else composite with each other, for feeding to the central control unit so as to control the overall system operation, in respect of which the quantity to be installed is dependent on system requirements;
the harmful gas detector (SD 101) is provided to detect the concentration of harmful gases, if any, in the surrounding environments when the charging is in progress, made to the engine, whether in manual control mode or in automatic mode of activation, and the operation will be stopped where the concentration as detected exceeds a safety margin, but allowed for continued operation where the reading detected falls within tolerance, in respect of which the quantity for installation is dictated by system requirements;
the ambient temperature detector (SD 102) composed of temperature sensors, plus mechanic or solid state components, intended for automatic detection of ambient temperatures, and with the equivalent electric power signal detected transmitted to the central control unit (CCU 101), so that charging may be suspended, other forms of operation stopped when the ambient temp. thus identified exceeds a given threshold value, whereas continued system operation is allowed where the ambient temp, is found to be within rated working temp, ranges; in respect of which the quantity to be supplied is dependent on system requirements, and the provision, on top of that, is an optional choice.

7. An electric power source according to claim 5 or claim 6, wherein the system of automatic surveillant revolving storage battery auxiliary charge further comprises a control circuit comprising:
the arrangement for a forward series blocking diode (CR101) to be connected to the output terminal of the battery (BAT 101), which is set parallel with the D.C. output terminal outgoing from the D.C, or A.C. rectification of the generator (G 101), across both ends of diode (CR 101) is paralleled a regulator (RG 101), so that (RG 101) is made active to regulate power that is charged way from the generator to the battery; (RG 101) may be further adapted to be receptor to control signals emitted from the central control unit (CCU 101) basing on the test outcome from battery storage detector (BCD 101) so as to allow for regulation of charging rates or currents, and for control of startup or stopping of charging functions as well.

8. An electric power source according to claim 5 of claim 6, wherein the system of automatic surveillant revolving storage battery auxiliary charge further comprises a control circuit comprising:
the arrangement for a blocking diode (CR 101) connected in forward series to (BAT 101), to thence form a parallel output with the D.C. output terminal following a D.C. or A.C. rectification of the generator (G 101).

9. An electric power source according to claim 5 of claim 6, wherein the system of automatic surveillant revolving storage battery auxiliary charge further comprises a control circuit comprising:
the arrangement for a blocking diode (CR 101) to be serially forward-connected to the output terminal of the battery (BAT101), to thence form a paralleled output with the D.C. output terminal resultant from the D.C. or A.C. rectification of the generator (G 101), with a resistive or conductive or composite resistive/conductive impedance (Z 101) put in parallel connection across both ends of the blocking diode (see Fig. 20) in lieu of the proper functioning or the regulator (RG 101) to restrict the charging of currents way from the generator to the battery.

10. An electric power source according to claim 5 of claim 6, wherein the system of automatic surveillant revolving storage battery auxiliary charge further comprises a control circuit comprising:
the connection in forward series sense of a blocking diode (CR 101) at the output end of the battery (BAT 10 1), to form a parallel output across the D.C. output end following D.C. or A.C. rectification of the generator (G 101), while both ends of blocking diode (CR 101) may be further paralleled with a mechanic or solid state controllable two-way switch (SSW 101) to permit an open circuit or close circuit alteration control across the output terminals of both the battery (BAT 101) and generator (G 101) in lieu of the proper functioning of regulator (RG 101), that in turn to allow control of the charging status way from the generator (G 101) to the battery (BAT 101), and of the output status of (BAT 101) to the load motor (M 101).

11. An electric power source according to claim 5 of claim 6, wherein the system of automatic surveillant revolving storage battery auxiliary charge further comprises a control circuit comprising:
the arrangement for the block diode (CR 101) connected in forward series sense to the output end of (BAT 101), and the output end of a series diode (CR 101) in forward connection to (BAT 101), by way of which D.C. power is supplied from the generator (G 101) that is governed by the regulator (RG 101), or alternatively an impedance element (Z 101) bearing the same function or else a controllable two-way switch (SSW 101), to be of the same polarity altogether, while that end coming from the power terminal of the generator, connected to the output end of a common contact (COM) diode (CR 101) in common with the two-way switch (SSW 102) in command of point C may, as dictated by circuit, requirement , be severally connected to the NO point and NC point of the two-way switch (SSW 102) in command of point C, or alternatively a reversal of such a connection is granted so as to render possible control by the generator (G 101) of the outpout status of the charging status of the battery, and that of the battery to the load motor (M 101) or other load.

12. An electric power source according to claim 5 or claim 6; wherein the system of automatic surveillant revolving storage battery auxiliary charge is capable of operating under central control unit (CCU) setting or alternatively manual control; and the restriction for the generator to yield output after the engine has been initiated for some time, that is, the generator output is necessarily lagging behind engine initiation.

13. An electric power source according to claim 5 or claim 6; wherein the system of automatic surveillant revolving storage battery auxiliary charge is capable of operating under central control unit (CCU) setting or alternatively manual control; and while the system is running continuously in operation, the engine set must be maintained at idle running warmup condition when no output of power comes from the generator, so as to get prepared for output operation.

14. An electric power source according to claim 5 or claim 6; wherein the system of automatic surveillant revolving storage battery auxiliary charge is capable of operating under central control unit (CCU) setting or alternatively manual control; and
while the entire system stops operation, the engine generator must continue in heat dissipation running so as to prevent accumulation of heat in the engine, and upon completion of heat dissipation running, stop running altogether.

15. An electric power source according to claim 5 or claim 6; wherein the system of automatic surveillant revolving storage battery auxiliary charge is capable of operating under central control unit (CCU) setting or alternatively manual control; and
while the system runs in operation, the engine generator must be subjected to control effected from a first temperature testing device (TS 101) located in the engine or a second temperature testing device (TS 102) located in the generator, so that engine rotation is stopped when the temperature is found to exceed a predetermined level, or alternatively is made to yield - lesser power output.

16. An electric power source according to claim 5 or claim 6; wherein the system of automatic surveillant revolving storage battery auxiliary charge is capable of operating under central control unit (CCU) setting or alternatively manual control; and while the system is running in operation, when due to manipulation of manual control or central unit control (CCU) automatic control, the engine is set to a preparatory status or the system comes to a prepare-to-stop condition, the engine set will be driven to intermittent operation, basing on the engine temperature that is predetermined in the central control unit (CCU), so as to maintain a preparatory state advantageous to temperature initiation.

17. An electric power source according to claim 5 or claim 6, whereof engine kinetics as related engine generator set, more than just for transmission of the generator, may serve to transmit cooling or heating temperature regulator of the pump type and driven by mechanic energy or else other peripheral devices transmittable by revolving mechanic drives which may at the same time, as dictated by requirements, be selectively equipped with electric motor drive devices, and to be driven by engine kinetics capable of transmitting clutches or incorporating one-way clutches.

18. An electric power source according to claim 5 or claim 6, whereof there is provided a one-way transmission clutch (SWC 100) way between engine set (ICE 101) and generator (G 101), with one-way transmission clutch (SWC 101) installed in-between generator (G 101) and load motor (M 101) output end or the load, with the load, while exerting inertial idle running in one direction, capable of driving the generator (G101), so that the generator (G 101) is made possible to realize braking action owing to recycled generation while the one-way transmission clutch (SWC 100) is idle running; when engine set (ICE 101) drives the generator (G 101) to operation, one-way transmission clutch (SWC 101) will be idle running; said one-way transmission clutch may be replaced with artificial or mechanical or power driven or fluid powered clutching devices or come as a version of combination thereof, while clutch in a disengaged status is equivalent to a one-way clutch in an idle running status, whereas clutch in a closure state amounts to a one-way clutch in a disengaged state.

## Patentansprüche

1. Elektrische Leistungsquelle zur Zuführung von elektrischer Leistung an eine Last, wobei die Leistungsquelle Folgendes umfasst:
eine Speicherbatterie (BAT101);
eine Maschine (ICE101);
einen Generator (G101), der von der Maschine (ICE101) um elektrische Leistung zu erzeugen, um die Batterie (BAT101) zu laden und die Last zu versorgen;
eine Steuerung, die den Betrieb der Maschine steuert, um elektrischen Strom selektiv an die Batterie (BAT101) und an die Last zu führen, und die die Proportion von elektrischer Leistung steuert, die von der Batterie (BAT101) und dem Generator (G101) an Last geführt wird;
ein Ladestatus-Testgerät (BCD101), das angeordnet ist, um die Ladung, die Entladung oder statische Ladefehler während der wiederholten Lade-/Entlade-Wiedergewinnungsvorgänge zu testen;
einen Lastmotor (M101), der zur Vorwärtsdrehungs-, Rückwärtsdrehungs-, Geschwindigkeitsregelungs- und Stoppfunktionen in der Lage ist;
einen Stromdetektor (ID 100), der in Reihe mit einem Ausgangsendgerät des Generators verbunden ist;
einen Stromdetektor (ID 200), der in Reihe mit einem Ausgangsendgerät der Speicherbatterie (BAT101) verbunden ist;
eine felderregte Steuerung (FEC101), die angeordnet ist, um die elektrische Leistung vom Generator (G101) zu regeln;
einen Brennstoffzufuhr-Servomechanismus (FC101), der angeordnet ist, um die Brennstoffzufuhr an die Maschine zu steuern, und dadurch die Motordrehgeschwindigkeit und das Drehmoment zu regeln;
einen Anlasser (M100), der angeordnet ist, um Drehleistung zu erzeugen, um die Maschine zu starten;
eine Anlasser-Antriebssteuerung (CD 100), die angeordnet ist, um den Anlasser anzutreiben.
eine Lastmotor-Antriebssteuerung (CD 101), die angeordnet ist, um den Lastmotor anzutreiben;
eine zentrale Steuereinheit (CCU101), die mit der Maschine, dem Generator, der Speicherbatterie, dem Lastmotor und anderen Lasten im Steuersystem verbunden und angeordnet ist, um auf Anweisungen von der manuellen Steuervorrichtung und auf Rückkoppelungssignale zu reagieren, um Wechselwirkungen zwischen der Maschine, dem Generator, der Speicherbatterie, dem Lastmotor und anderen Lasten im Steuersystem zu verwalten,
einen Maschinengeschwindigkeitsdetektor (SPD101), der angeordnet ist, um eine Winkelverschiebung des Maschine in ein Maschinengeschwindigkeitssignal umzuwandeln, das in die zentrale Steuereinheit (CCU101) eingegeben wird, und dadurch die Brennstoffzufuhr vom Brennstoffzufuhr-Servomechanismus an die Maschine zu regeln;
eine manuelle Steuervorrichtung (MI 101) zur Eingabe in die zentrale Steuereinheit, um den gesamten Betrieb des Systems zu steuern;
eine Hilfsleistungsversorgung (B+), die angeordnet ist, um Leistung an die zentrale Steuereinheit, die manuelle Steuervorrichtung und die Antriebssteuerungen zu führen;
**dadurch gekennzeichnet, dass** die zentrale Steuereinheit (CCU101) weiter so angeordnet ist, dass sie, wenn die Last auf dem Lastmotor (M101) derart erhöht wird, dass die elektrische Leistung, die den Lastmotor (M101) antreibt, während eines festgesetzten Zeitraums einen Schwellenwert übersteigt, verursacht, dass die Maschine (ICE101), die den Generator (G101) antreibt, startet, um dem Lastmotor elektrische Leistung bereitzustellen, und verursacht, dass die Maschine (ICE101) stoppt, nachdem die Ausgangsleistung des Lastmotors (M101) wider eine normale Nennleistung über einen vorbestimmten Zeitraums hinaus aufnimmt.

2. Elektrische Leistungsquelle nach Anspruch 1, weiter umfassend einen Detektor von schädlichem Gas, der angeordnet ist, um die Konzentration von schädlichen Gasen in der Umgebung nachzuweisen, so dass der Betrieb der Maschine gestoppt wird, wenn die nachgewiesene Konzentration eine Sicherheitsspanne übersteigt, der Betrieb aber erneut startet, wenn sie unter die Sicherheitsspanne fällt.

3. Elektrische Leistungsquelle nach Anspruch 2,wobei die zentrale Steuereinheit angeordnet ist, um die Maschine (ICE101) zu starten, wenn Strom, die vom Stromdetektor (1D200) nachgewiesen wird, einen festen Strom übersteigt, während der Lastmotor nur von der Batterie (BAT101) angetrieben wird, so das die Last zusammen von der Batterie (BAT101) und von der Maschine (ICE 101) mit dem Generator (G101) angetrieben wird.

4. Elektrische Leistungsquelle nach einem der vorhergehenden Ansprüche, weiter umfassend:
einen Umgebungstemperatur-Detektor (SD102), der angeordnet ist, um automatisch Umgebungstemperaturen nachzuweisen, wobei sein Ausgang an die zentrale Steuereinheit übermittelt wird,
wobei, wenn der Lastmotor (M101) nur von der Speicherbatterie (BAT101) angetrieben wird, die zentrale Steuereinheit (CCU101) so angeordnet ist, dass sie, wenn sich die Last auf dem Lastmotor (M101) erhöht, so dass die elektrische Leistung, die den Lastmotor (M101) antreibt, einen Schwellenwert und einen festgesetzten Zeitraum übersteigt, verursacht, dass die Maschine (ICE101), die den Generator (G101) antreibt, startet, um dem Lastmotor (M101) zusammen mit der Speicherbatterie (BAT101) elektrische Leistung bereitzustellen;
wobei die elektrische Leistungsquelle weiter eine felderregte Steuerung (FEC101) umfasst, die angeordnet ist, um die elektrischen Leistung vom Generator (G101) zu regeln;
wobei die zentrale Steuereinheit (CCU101) die Ladung unterbricht und anderen Formen des Betriebsformen stoppt, wenn die Umgebungstemperatur einen bestimmten Schwellenwert übersteigt, und ein fortgesetzter Betrieb des Systems ermöglicht wird, wenn sich zeigt, dass die Umgebungstemperatur in einem vorbestimmten Arbeitstemperaturbereich liegt.

5. Elektrische Leistungsquelle nach Anspruch 1,angeordnet, um die Speicherbatterie (BAT101) durch die Verwendung des Maschinendynamos als ihre Leistungsversorgung in einem angemessen geladenen Zustand zu halten. um eine rechtzeitige Hilfsladung bereitzustellen, um an einen Lastmotor oder andere Lasten zu übertragen oder auch an stationäre oder Träger-geladene Batterien; wobei im Betrieb eine Testmessung durchgeführt wird, basierend auf manuellen Steuermodi, oder auch auf der zentralen Steuereinheit, die für diesen Zweck programmiert ist, wobei der Batterieladezustand berücksichtigt wird mit Bezug auf die Batterie, und wobei die Testsignale, die so erhalten werden, mit dem oben erwähnten Steuer- oder programmierten Wert verglichen werden, um einen gleich großen kontrollierten Betrieb der von der Maschine angetriebenen Generatoreinheit durchzuführen, darin eingeschlossen optional verschiedene Funktionen, umfassend eine oder alle der Folgenden:
(1) Die Fähigkeit, den Motor und die Maschine zu laden und zu initiieren, den Generator ausschließlich durch die Ladung der Batterie (BAT101), wenn, angesichts des Tests des Batteriesättigungszustands, bestätigt wird, dass die Batterieladung auf ein voreingestelltes Niveau abgefallen ist;
(2) die Fähigkeit, Leistung an den Lastmotor oder andere Lasten und die Speicherbatterie zu liefern, basierend auf dem Ergebnis des Tests des Speicherbatterie-Sättigungszustands-Signals, durch einen Vergleich der Betriebsmodi, die in der zentralen Steuereinheit programmiert sind, gefolgt vom Ausgang von Nenn- oder messbarer Leistung oder auch festem Strom oder kontrolliertem Strom durch eine entsprechende Steuerung des Generators, wodurch der Ladefaktor angepasst wird, oder durch eine angemessene Zuteilung von Strömen, die an beide geliefert werden, wobei ermöglicht wird, automatisch auf Funktion (3) zu schalten, wenn die entsprechend verstärkte Last den Erzeugungsleistungsfaktor des Generators übersteigt, aber auf den primären Betriebszustand zurückzuschalten, wenn der Ladefaktor auf ein Niveau unter dem Erzeugungsleistungsfaktor des Generators fällt.
(3) Fähigkeit, eine relative Steuerung des Generators für einen festen Strom- oder einen gesteuerten Stromausgang durchzuführen, oder auch für einen festen Leistungsfaktor- oder einen gesteuerten Leistungsfaktorausgang, basierend auf dem Stromspeicherzustand der Speicherbatterie, um auf gesteuerte Weise den Generator und die Batterie unter Berücksichtigung des Generatorleistungsfaktors und den Ladefaktors beider Ströme aufzuteilen, so dass der Generator und die Speicherbatterie gemeinsam den Lastmotor oder andere Lasten antreiben, und schließlich auf die Funktion (2) schalten, in der sich die Last reduziert hat, wobei der Ladefaktor herabgesetzt ist auf ein Niveau unter dem Generatorleistungsfaktor, aber zur primären Funktion zurückkehren, die im Betrieb läuft, wenn der Lastfaktor ein Niveau erreicht, das größer; als der Erzeugungsfaktor des Generators ist.
(4) die Fähigkeit, den Laststromstatus des Lastmotors zu überprüfen, wenn er nur von der Batterie angetrieben wird, so dass, nachdem der Leistungsfaktor des Lastmotors oder anderer auf ein Niveau über dem eingestellten Wert oder über der eingestellten Zeit steigt, die Maschine und der Generator automatisch angetrieben werden, während der *modus operandi,* programmiert in der zentralen Steuereinheit, funktioniert, um einen Betrieb bei festem Strom oder gesteuertem Strom oder fester Leistung oder gesteuerter Leistung zu bewirken, in dem Bestreben, die Last zusammen mit der Speicherbatterie anzutreiben, außerdem wird der Betrieb des Maschinendynamos gestoppt, gefolgt von einer fortgesetzten Versorgung mit Leistung von der Speicherbatterie an den Lastmotor oder eine andere Last, nachdem der Lastmotor oder ein anderer Lastleistungsfaktor die normale Einschätzung über einen vorbestimmten Zeitraum hinaus wieder aufnimmt.
(5) die Fähigkeit, die Maschine und den Generator angemessen in Antwort auf die Bedienung der manuellen Steuerung anzutreiben, so dass der Generator mit seinem Ausgang allein den Lastmotor oder eine andere Last antreiben kann, und, nachdem sich die Last, geladen auf den Lastmotor, ausweitet, das Potenzial, geladen in der Batterie, die Last zusammen mit dem Potenzial antreiben kann, das vom Generator erzeugt wird, und weiter dass, nachdem die Motorlast wieder normal ist, die Batterie keine Leistung mehr ausgibt, so dass die Last stattdessen von der Leistung angetrieben wird, die vom Maschinendynamo stammt.
(6) die Fähigkeit, die Bedienung von der manuellen Steuereinheit zu akzeptieren, um die Maschine und den Dynamo für feste Strom-, gesteuerte Strom- oder auch feste Leistungs- oder gespeicherte Ladeleistungserzeugung zu initiieren, um auf eine Weise den Lastmotor anzutreiben und die Speicherbatterie zu laden, die proportional zur angepassten Erzeugungsleistung und Last oder alternativ zum Strom, in beiden Fällen ebenfalls wie angepasst, ist, wobei ermöglicht wird, automatisch auf den Funktionsmodus (7) zu schalten, nachdem die Last auf ein Niveau verstärkt wird, das über der Erzeugungsleistung des Generators liegt, jedoch zur primären Funktion zurückzukehren, nachdem der Lastfaktor ein Niveau erreicht, das unter der gleichen Erzeugungsleistung liegt;
(7) die Fähigkeit, die Bedienung von der manuellen Steuereinheit zu akzeptieren, um die Maschine und den Dynamo für feste Strom-, gesteuerte Strom- oder auch feste Leistungs- oder gesteuerte Leistungszeugung zu initiieren, um den Dynamo und die Batterie zu laden, um gemeinsam den Lastmotor oder die andere Last entsprechend der Erzeugung von Leistung, der Ladung oder des Stroms, in beiden Fällen in proportionaler Verteilung, anzutreiben, auch, damit der Betrieb unter Funktion (6) erfolgt, wenn die Last reduziert wird und die Ladeleistung geringer als die Erzeugungsleistung ist, jedoch in den primären Funktionsmodus zurückkehrt, wenn die Ladeleistung die Erzeugung der Leistung übersteigt.
(8) die Fähigkeit, die Bedienung von der manuellen Steuereinheit zu akzeptieren, um die Maschine und den Dynamo zu initiieren, um individuell mit Bezug auf die Batterie zu laden.
(9) die Fähigkeit, die Bedienung von der manuellen Steuereinheit zu akzeptieren, um die Maschine und den Dynamo zu initiieren, um individuell Ladezeiten zu programmieren, um Ladeströme an die Batterie zu begrenzen, den Leistungsfaktor an die Batterie, und die Unterbrechung der Ladung and den Maschinendynamo auszulösen, wobei die Steuerung der Ladezeit in diesem Zusammenhang eine zusätzliche Ladung der Sättigungsladung oder Notladung als eine teilweise angewendete Ladung an die Batterie umfasst;
(10) die Vorkehrung zum Stopp des Betriebs der Maschinendynamoeinheit, wenn die Batterie eine vorbestimmte Sättigung erreicht, wie im Laufe des Betriebs unter Funktion (1), (8) oder (9) festgelegt;
(11) Vorkehrung zum Stopp der Ladung mit Bezug auf die Batterie, ohne die Leistung zu beeinflussen, die vom Maschinendynamo an den Lastmotor durch die Bedienung entweder der manuellen Steuereinheit oder auch der zentralen Steuereinheit ausgegeben wird, nachdem die Batterie einen vorbestimmten Sättigungspunkt erreicht, der im Laufe des Betriebs unter Funktion (2) oder (6) überprüft wird;
(12) Vorkehrung zum Stopp des Betriebs des Maschinendynamos so dass der Leistungsausgang an den Lastmotor von der Batterie durch die Bedienung entweder der manuellen Steuereinheit oder der zentralen Steuereinheit geliefert wird, nachdem die Batterie einen vorbestimmten Sättigungspunkt erreicht, der im Laufe des Betriebs unter Funktion (2) oder (6) überprüft wird;
(13) Vorkehrung, damit der Maschinendynamo weiterhin gleichzeitig mit der Batterie läuft und von einem Ladestatus wechselt, um gemeinsam Eingangsleistung mit dem Dynamo an den Lastmotor zu liefern, durch die Bedienung entweder der manuellen Steuereinheit oder der zentralen Steuereinheit nachdem die Batterie einen vorbestimmten Sättigungspunkt erreicht, der im Laufe des Betriebs unter Funktion (2) oder (6) überprüft wird;
(14) Vorkehrung, um die Erzeugungsleistung des Generators relativ zu regeln, basierend auf dem Ladestromsignal, das als Ergebnis des Tests eingeht, der durchgeführt wird, wenn der Generator die Batterie alleine lädt oder gleichzeitig Leistung an den Lademotor liefert, während er gleichzeitig die Batterie im Laufe des Betriebs unter Funktion (1), (2), (6), (8), oder (9) lädt;
(15) Überwachung von peripheren schädlichen Gasen durch den Test der Konzentration von peripheren schädlichen Gasen, so dass, nachdem ein kritischer Wert überstiegen wurde, die Ladung gestoppt wird, wobei sofort der funktionelle Betrieb gestoppt wird, und ein Neustart erfolgt, nachdem der Wert auf ein Niveau abgefallen ist, das unter dem kritischen Niveau liegt, wobei der Test durchgeführt wird, wenn die Ladung bei automatischer oder manueller Übertragung erfolgt, oder alternativ ein anderer funktioneller Betrieb vor sich geht, mithilfe eines Detektors von schädlichem Gas.
(16) Überwachung der Umgebungstemperatur durch die Kontrolle eines Detektors der Umgebungstemperatur, um die Ladung oder einen anderen Betrieb zu stoppen, wenn die Temperatur einen vorbestimmten Wert übersteigt, während andere Betriebsmodi innerhalb des normalen Temperaturbereichs zugelassen werden, aber derart, dass die Maschine und der Generator automatisch übertragen werden, wenn die Temperatur zu weit oder in einem Abschaltzustand abfällt , um eine anhaltende Ladung für die Batterie aufrechtzuerhalten, so dass Letztere bei allen Eventualitäten in einem einsatzbereiten Zustand gehalten wird; wobei ein System zur automatischen Überwachung einer drehenden Hilfs-Speicherbatterieladung einsatzbereit ist, um die Speicherbatterie in eine Leistungsspeicherbedingung zu versetzen, um die Speicherbatterie zu entladen und dabei die Lebensdauer der Batterieeinheit zu verlängern.

6. Elektrische Leistungsquelle nach Anspruch 5,wobei das System zur automatischen Überwachung einer drehenden Hilfs-Speicherbatterieladung Folgendes umfasst:
die Batterie (BAT 101), die weiter eine sekundäre Batterie umfasst, die zu einem wiederholten Lade-/Entlade-Wiedergewinnungsvorgang in der Lage ist, wobei es sich z.B. um eine Batterie aus der Bleisäure-, Nickel/Cadmium-, Nickel/Stickstoff- oder Nickel/Zink-Struktur oder aus dem Lithiumsystem oder auch aus dem Zink-System oder einem anderen sekundären Batteriesystem handeln kann;
den Speicherstatustester (BCD 101) bereitgestellt, um einen ununterbrochenen oder periodischen Test durchzuführen, oder auch, um zu digitaler oder analoger Leistungssignalausgabe umzuwandeln für Vergleiche unter Verwendung relevanter Ladung oder Entladung oder statische Ladefehler, gefolgt von einem Korrekturverfahren, und mechanische oder Festkörper-elektronische Elemente umfasst, die analoge Testschaltungen bilden, oder alternativ digitale Testschaltungen, die aus Mikroprozessoren und relevanter Software bestehen, Schnittstellenanpassung von elektronischen Elementen oder auch ein Kombination aus beiden Durchführungen;
einen Regler (RG 101) der aus mechanischen oder Festkörper-elektronischen Elementen zusammengesetzt ist, .optional abhängig von Systemanforderungen, die, durch die Bezugnahme auf Ausgabespannung/Strom vom Generator (G 101), oder alternativ den Erhalt von Anweisungen von der zentralen Steuereinheit (CCU 101), Ausgabeleistung an den primären Generator (G 101) rückführt.
einen ersten Stromdetektor (ID 100), der in Reihe mit einem Ausgabeendgerät des Generators verbunden ist; mit Stromabtastmitteln, umfassend Widerstands- oder Leitelemente oder auch Magnetfeldsensoren oder auch Mittel des Typs Wärmesammlung oder elektromagnetischer Effekt, dazu in der Lage, Stromtestwerte zu liefern, um in analoge Signale umgewandelt zu werden, wodurch ein Ausgangsstrom für den Generator (G 101) erzeugt wird, der getestet wird, oder ein Eingangsstrom unter spezifischen Bedingungen, wodurch der Regler (RG 101) gesteuert und eingestellt wird, oder auch, um in die zentrale Steuereinheit (CCU 101) eingegeben zu werden, um wiederum die Betriebsbedingung des Generators (G101) zu steuern, was auch eine optionale Wahl darstellt.
einen zweiten Stromdetektor (ID 200), der in Reihe zwischen dem Eingangs-/Ausgangsendgerät der Batterie (BAT 101) und der Übertragungssteuerung (CD 101) oder einem Gleichrichter (IVT 101) verbunden ist; .wobei ein Stromabtastmittel ein Widerstandselement oder einen Leitelement oder eine Kombination aus beiden umfasst, oder andere Elemente abgetastet, durch die Stärke der Magnetfelder getestet werden können, oder auch zusammengesetzt aus Vorrichtungen, die dazu in der Lage sind, analoge Signale durch die gemessenen Ströme des Typs Wärmeansammlung oder des Typs Magnetwirkungstest zu erzeugen, dazu ausgelegt, den Ausgangs- oder Eingangstrom der zu testenden Batterie zu testen, dann eingegeben in die Antriebssteuerung (CD 101) oder die zentrale Steuereinheit (CCU 101),um in der Folge die Ausgangsleistung (BAT 101) zu steuern, was ebenfalls eine optionale Wahl darstellt;
die Maschineneinheit (ICE 101), umfassend eine sich drehende oder hin- und herbewegende interne Verbrennungsmaschine die Benzin oder Dieselöl oder Gas oder einen anderen flüssigen Treibstoff verwendet, um ihn in dynamische Leistung zur Ausgabe umzuwandeln;
den Generator (G 101), umfassend einen verankerten oder nicht verankerten Mechanismus, Gleichstrom oder Wechselstrom, um die eingehende Maschinendrehleistung in Wechselstromleistung oder Gleichstromleitung umzuwandeln, oder, im Fall von Wechselstromleistung, diesen durch die Gleichrichtung am Gleichrichter (B 101) in einen Gleichstromleistungsausgang umzuwandeln, um den Lastmotor (M 101) anzutreiben und die Batterien zu laden;
den Gleichrichter (BR 101), der durch Gleichrichtung eine Einphasen- oder Mehrphasenwechselstromleistung in eine Gleichstromleistung umwandelt bei der Behandlung mit Wechselstromdynamos, eine optionale Wahl, die von den Systemanforderungen abhängt.
die felderregte Steuerung (FEC 101), zusammengesetzt aus mechanischen und Festkörper-Elementen, um die Leistung zu kontrollieren, die aus dem Wechselstrom oder Gleichstromgenerator ausgeht, umfassend felderregte Wicklungen, basierend auf dem Ausgabestatus des Generators und den Einstellungen der manuellen Steuervorrichtung (MI 101) und der zentralen Steuereinheit (CCU 101) um in regulatorische Kontrolle der Spannung, des Stroms und der Leistung zu erzielen, wobei dieses Merkmal zu speichern ist, wenn der Generatorpol vom Typ Dauermagnet ist;
den Maschinengeschwindigkeitsdetektor (SPD 101) der analog oder digital ist, dazu in der Lage, Winkelverschiebungen in entsprechende elektrische Signale in elektromagnetischer oder photoelektrischer Form umzuwandeln, um Maschinengeschwindigkeitssignale in die zentrale Steuereinheit (CCU 101) einzugeben, und folglich die Zufuhr von Brennstoff vom Servomechanismus (FC 101) an die Maschineneinheit zu regeln, wobei der Signalwert dieser Vorrichtung kann auch durch den analogen Spannungs- oder Frequenzwert substituiert werden; wobei der Maschinengeschwindigkeitsdetektor (SPD 101) aus einer mechanischen Struktur bestehen kann, wie z.B. einer zentrifugalen Teststruktur oder einer anderen mechanischen Struktur, und in mechanischer Wechselwirkung mit dem Servomechanismus der Kraftstoffversorgung (FC 101) hergestellt ist, um die Maschineneinheit (ICE 101) in eine Drehung mit fester Geschwindigkeit zu versetzen, wobei beide Ausführungen, die hier offenbart sind, je nach der Art des verwendeten Systems übernommen werden müssen, und die Vorrichtung außerdem eine optionale Wahl, ist die von den Systemanforderungen abhängt;
den Anlasser (M 100) ist, der aus einer elektrischen Struktur zusammengesetzt ist, synchron oder asynchron, Wechselstrom oder Gleichstrom, verankert oder nicht verankert, um eine Eingangsleistung aufzunehmen, um Drehleistung zu erzeugen, um wiederum die Maschineneinheit (ICE 101) zu initiieren;
die Brennstoffversorgungsvorrichtung (FC 101), um elektrische Leistungs-Servoanweisungen zu empfangen oder, alternativ, mechanische Wechselwirkung, strukturiert, um die Brennstoffversorgung an die Maschineneinheit (ICE 101) zu steuern, um wiederum die Drehgeschwindigkeit und die Torsion auf der Seite der Maschineneinheit (ICE 101) zu regeln, wobei beide Durchführungen optional sind, je nach der Ausführung des Systems;
einen Brennstofftank (TK 101), in dem Maschinenbrennstoff gelagert wird, um den Brennstoff, der an die Maschineneinheit (ICE 101) geliefert wird, mit Hilfe einer Brennstofflinie und der Brennstoffversorgungs-Servovorrichtung (FC 101), die dazwischen verbunden sind, zu steuern;
die Anlasser-Antriebssteuerung (CD 100), zusammengesetzt aus mechanischen oder Festkörper-Leistungselementen und assoziierten Schaltungen, um den Startermotor in Betrieb zu setzen oder seinen Betrieb zu stoppen;
die Lastmotor-Antriebssteuerung (CD 101), zusammengesetzt aus mechanischen oder Festkörper-Elementen und relevanten Schaltungen, um den Lastmotor (M 101) hinsichtlich Vor-/Rückdrehung, Geschwindigkeitsregelung, Start- und Stoppfunktion zu steuern, wobei in dieser Hinsicht die zu liefernde Menge von den Systemanforderungen abhängt;
den Lastmotor (M 101), zusammengesetzt aus Wechselstrom oder Gleichstrom, verankert oder nicht verankert, synchron oder nicht synchron, der Vorwärtsdrehung, Rückwärtsdrehung, Geschwindigkeitsregelung, Betrieb und Stopp und ähnliche derartige Funktionen durchführt, um eine Last zu übertragen, wobei der Lastmotor (M 101) auch aus anderen Lasten bestehen kann, wobei in dieser Hinsicht die Menge der Installation von den Systemanforderungen vorgegeben wird;
die Hilfsleistungsversorgung (B+) mit Leistung aus der Batterie (BAT 101) im System, oder mit einer zusätzlich bereitgestellten Batterieeinheit als die Hilfsleistungsversorgung dient oder als von der Dynamoerzeugung abgeleitet, und, in dem Bestreben, eine Leistungsversorgung an die zentrale Steuereinheit (CCU 101) oder die manuelle Steuereinheit (MI 101) oder die Antriebssteuerung (CD 101) an den Lastmotor (M 101) oder auch den Detektor von schädlichem Gas (SD101) oder die Antriebssteuerung (CD 101) an den Lastmotor (M 100) oder an die felderregte Steuerung (EFC 101) oder auch den Regler (RG 101) oder auch wie z.B. Beleuchtungseinrichtungen zum Betrieb, wo eine Hilfsbatterie bereitgestellt wird, zu liefern, kann der Generator zusätzlich mit entsprechenden Erzeugungswindungen ausgestattet sein, um die Ladung der Hilfsbatterie zu erleichtern;
den Gleichstrom-Wechselstrom-Umwandler (IVT 101), der aus Festkörper-Leistungselementen und assoziierten Schaltungen zusammengesetzt ist, um Gleichstromleistung in Wechselstromleistung umzuwandeln, um Wechselstromlasten zu ermöglichen, wobei in dieser Hinsicht die zu liefernde Menge von den Systemanforderungen abhängt.
die zentrale Steuereinheit (CCU 101): zusammengesetzt aus mechanischen oder Feststoffelementen, die alternativ eine analoge oder digitale Struktur oder eine kombinierte Struktur aus beiden Ausführungen bilden; oder auch aus einem Mikroprozessor, umfassend Betriebs- und Steuersoftwarepakete, Gleichstrom-Wechselstrom-Umwandler, Wechselstrom-Gleichstrom-Umwandler oder andere relevante ckt-Elemente, wobei die internen Betriebsmodi mit Anweisungen eingestellt sind, die von der manuellen Steuervorrichtung (MI 101) oder Rückkoppelungssignalen stammen, um die Wechselwirkungen zwischen dem Generator (G 101), der Batterie (BAT 101), dem Lastmotor (M 101) oder anderen Lasten im Steuersystem, ebenso wie andere assoziierte Vorrichtungen für einen geregelten Betrieb zu verwalten;
die manuelle Steuervorrichtung (MI 101), die nur aus mechanischen oder Feststoffelementen zusammengesetzt ist, im analogen Modus oder im digitalen Modus als getrennt von oder auch zusammengesetzt mit einander, um in die zentrale Steuereinheit einzugeben, um den gesamten Systembetrieb zu steuern, wobei in dieser Hinsicht die zu installierende Menge von den Systemanforderungen abhängt;
den Detektor von schädlichem Gas (SD 101) der bereitgestellt ist, um die Konzentration von schädlichen Gasen, falls vorhanden, in der Umgebung nachzuweisen, wenn die Ladung vor sich geht, ausgeführt an die Maschine, ob im manuellen Steuermodus oder im automatischen Aktivierungsmodus, und wobei Betrieb gestoppt wird, wenn die festgestellte Konzentration eine Sicherheitsspanne übersteigt, aber fortgesetzt werden kann, wenn der festgestellte Wert innerhalb der Toleranz liegt, wobei in dieser Hinsicht die Menge der Installation von den Systemanforderungen vorgegeben wird;
den Detektor der Umgebungstemperatur (SD 102), zusammengesetzt aus Temperatursensoren plus mechanischen oder Feststoffkomponenten, ausgelegt für den automatischen Nachweis von Umgebungstemperaturen, und wobei das äquivalente elektrische Leistungssignal an die zentrale Steuereinheit (CCU 101) übertragen wird, so dass die Ladung unterbrochen werden kann, andere Betriebsformen gestoppt werden können, wenn die so identifizierte Umgebungstemperatur einen bestimmten Schwellenwert übersteigt, während ein fortgesetzter Systembetrieb ermöglicht wird, wenn sich zeigt, dass die Umgebungstemperatur innerhalb von gemessenen Arbeitstemperaturbereichen liegt; wobei in dieser Hinsicht die zu installierende Menge von den Systemanforderungen abhängt; und die Bereitstellung außerdem eine optionale Wahl ist.

7. Elektrische Leistungsquelle nach Anspruch 5 oder Anspruch 6, wobei das System zur automatischen Überwachung einer drehenden Hilfs-Speicherbatterieladung weiter eine Steuerschaltung umfasst, die Folgendes umfasst:
die Anordnung, dass eine Sperrdiode einer vorwärts gerichteten Reihe (CR101)mit dem Ausgangsendgerät der Batterie (BAT101) verbunden wird, das parallel zum dem Gleichstrom-Ausgangsendgerät gesetzt ist, das von der Gleichstrom- oder Wechselstrom-Gleichrichtung des Generators (G 101) ausgeht, über beide Enden der Dioden (CR 101) verläuft ein Regler (RG 101) parallel, so dass (RG 101) aktiviert wird, um die Leistung zu regeln, die vom Generator an die Batterie geladen wird; (RG 101) kann weiter ausgelegt sein, um ein Rezeptor zu sein, um Signale zu steuern, die aus der zentralen Steuereinheit (CCU 101) ausgesendet werden, basierend auf dem Testergebnis vom Batterieladedetektor (BCD 101), um die Regelung der Laderaten oder Ströme zu ermöglichen, und auch, um den Start oder den Stopp der Ladefunktionen zu steuern.

8. Elektrische Leistungsquelle nach Anspruch 5 oder Anspruch 6, wobei das System zur automatischen Überwachung einer drehenden Hilfs-Speicherbatterieladung weiter eine Steuerschaltung umfasst, die Folgendes umfasst:
die Anordnung, dass eine Sperrdiode (CR101) in einer vorwärts gerichteten Reihe mit (BAT 101) verbunden ist, um daraus einen parallelen Ausgang mit dem Gleichstromausgangs-Endgerät zu bilden, nach einer Gleichstrom- oder Wechselstrom-Gleichrichtung des Generators (G 101).

9. Elektrische Leistungsquelle nach Anspruch 5 oder Anspruch 6, wobei das System zur automatischen Überwachung einer drehenden Hilfs-Speicherbatterieladung weiter eine Steuerschaltung umfasst, die Folgendes umfasst:
die Anordnung, dass eine Sperrdiode (CR 101) in Reihe mit dem AusgangsEndgerät der Batterie (BAT 101) vorwärtsgerichtet verbunden ist, um daraus einen parallel verlaufenden Ausgang mit dem Gleichstromausgangs-Endgerät zu bilden, der sich aus der Gleichstrom- oder Wechselstrom-Gleichrichtung des Generators ergibt (G 101), wobei eine Widerstands- oder Leit- oder zusammengesetzte Widerstands-/Leit-Impedanz (Z 101) in paralleler Verbindung über beide Enden der Sperrdiode (siehe Fig. 20) gebracht ist, anstelle der korrekten Funktion des Reglers (RG 101), um die Ladung von Strömen vom Generator an die Batterie einzuschränken.

10. Elektrische Leistungsquelle nach Anspruch 5 oder Anspruch 6, wobei das System zur automatischen Überwachung einer drehenden Hilfs-Speicherbatterieladung weiter eine Steuerschaltung umfasst, die Folgendes umfasst:
die Verbindung in vorwärts gerichteter Reihe einer Sperrdiode (CR 101) am Ausgangsende der Batterie (BAT 101), um einen parallelen Ausgang über dem Gleichstrom-Ausgangsende nach der Gleichstrom- oder Wechselstrom-Gleichrichtung des Generators (G 101) zu bilden, wobei beide Enden der Sperrdiode (CR 101) weiter mit einem steuerbaren mechanischen oder Feststoff-Zweiwegshalter (SSW 101) parallel geschaltet werden können, um eine Änderungssteuerung des offenen Stromkreises oder des geschlossnen Stromkreises in den Ausgangsendgeräten sowohl der Batterie (BAT 101) als auch des Generators (G 101) zu ermöglichen, anstelle der korrekten Funktion des Reglers (RG 101), die wiederum die Kontrolle des Ladestatus vom Generator (G 101) zur Batterie (BAT 101) und des Ausgangsstatus von (BAT 101) zum Lastmotor (M 101) ermöglichen.

11. Elektrische Leistungsquelle nach Anspruch 5 oder Anspruch 6, wobei das System zur automatischen Überwachung einer drehenden Hilfs-Speicherbatterieladung weiter eine Steuerschaltung umfasst, die Folgendes umfasst:
die Anordnung, dass die Sperrdiode (CR101) in Vorwärtsreihe mit dem Ausgangsende von (BAT 101) verbunden ist, und das Ausgangsende einer reihengeschalteten Diode (CR101) in vorwärts gerichteter Verbindung mit (BAT 101), wodurch Gleichstrom vom Generator (G 101) geliefert wird, der vom Regler (RG 101) verwaltet wird, oder alternativ einem Impedanzelement (Z 101), mit der gleichen Funktion oder auch einem steuerbaren Zweiwegschalter (SSW 101),um vollständig die gleiche Polarität aufzuweisen, während das Ende vom Leistungsendgerät des Generators, verbunden mit dem Ausgangsende einer gemeinsamen Kontakt (COM)-Diode (CR 101), zusammen mit dem Zweiwegschalter (SSW 102), der den Punkt C steuert, wie von der Schaltungsanforderung vorgegeben, einzeln mit dem NO-Punkt und dem NC-Punkt des Zweiwegschalters (SSW 102), der den Punkt C steuert, verbunden sein kann, oder, alternativ, eine Umkehrung einer derartigen Verbindung erteilt wird, um eine Steuerung durch den Generator (G 101) des Ausgangsstatus des Ladestatus der Batterie und der Batterie an den Lastmotor (M 101) oder eine andere Last zu ermöglichen.

12. Elektrische Leistungsquelle nach Anspruch 5 oder Anspruch 6, wobei das System zur automatischen Überwachung einer drehenden Hilfs-Speicherbatterieladung
dazu in der Lage ist, unter einer Einstellung der zentralen Steuereinheit (CCU) zu arbeiten oder alternativ einer manuellen Steuerung;
und der Einschränkung, dass der Leistungsgenerator einen Ausgang erzeugt, nachdem die Maschine einige Zeit lang initiiert war, d.h. der Ausgang des Generators ist nach der Maschineninitiierung notwendigerweise verzögert.

13. Elektrische Leistungsquelle nach Anspruch 5 oder Anspruch 6, wobei das System zur automatischen Überwachung einer drehenden Hilfs-Speicherbatterieladung dazu in der Lage ist, unter einer Einstellung der zentralen Steuereinheit (CCU) zu arbeiten oder alternativ einer manuellen Steuerung und während das System in ununterbrochenem Betrieb läuft, muss die Maschineneinstellung im Leerlauf-Warmlauf-Zustand gehalten werden.u.

14. Elektrische Leistungsquelle nach Anspruch 5 oder Anspruch 6, wobei das System zur automatischen Überwachung einer drehenden Hilfs-Speicherbatterieladung dazu in der Lage ist, unter einer Einstellung der zentralen Steuereinheit (CCU) zu arbeiten oder alternativ einer manuellen Steuerung; und
während das gesamte System den Betrieb stoppt, muss der Maschinengenerator im Wärmeableitungslauf weiterlaufen, um den Wärmestau in der Maschine zu verhindern, und, bei Beendigung des Wärmeableitungslaufs, den Lauf vollständig zu stoppen.

15. Elektrische Leistungsquelle nach Anspruch 5 oder Anspruch 6, wobei das System zur automatischen Überwachung einer drehenden Hilfs-Speicherbatterieladung dazu in der Lage ist, unter einer Einstellung der zentralen Steuereinheit (CCU) zu arbeiten oder alternativ einer manuellen Steuerung; und
während das System im Betrieb läuft, muss der Maschinengenerator einer Steuerung unterzogen sein, durchgeführt von der ersten Temperaturtestvorrichtung (TS 101), die sich in der Maschine befindet, oder einer zweiten Temperaturtestvorrichtung (TS 102), die sich im Generator befindet, so dass die Maschinendrehung gestoppt wird, wenn sich zeigt, dass die Temperatur ein vorbestimmtes Niveau übersteigt, oder alternativ hergestellt ist, um einen geringeren Leistungsausgang zu erzeugen.

16. Elektrische Leistungsquelle nach Anspruch 5 oder Anspruch 6, wobei das System zur automatischen Überwachung einer drehenden Hilfs-Speicherbatterieladung dazu in der Lage ist, unter einer Einstellung der zentralen Steuereinheit (CCU) zu arbeiten oder alternativ einer manuellen Steuerung und während das System im Betrieb läuft, wenn aufgrund der Bedienung der manuellen Steuerung oder der automatischen Steuerung der zentralen Steuereinheit (CCU) die Maschine auf einen vorbereitenden Status eingestellt ist, oder die Maschine in einen Zustand der Vorbereitung des Stopps gelangt, wird die Maschineneinheit in einem intermittierenden Betrieb angetrieben, basierend auf der Maschinentemperatur, die in der zentralen Steuereinheit (CCU) vorbestimmt ist, um einen Vorbereitungszustand zu halten, der für die Temperaturinitiierung vorteilhaft ist.

17. Elektrische Leistungsquelle nach Anspruch 5 oder Anspruch 6, wovon die Maschinenkinetik, bezogen auf das Maschinengeneratorelement, mehr als nur zur Übertragung des Generators, dienen kann, um Kühl- oder Heiztemperatur-Regler der Pumpenart zu übertragen, und angetrieben von mechanischer Energie oder auch anderen peripheren Vorrichtungen, die durch drehende mechanische Vorrichtungen übertragen werden können, .die gleichzeitig, wie von den Anforderungen vorgegeben, selektiv mit elektrischen Motorantriebs-Vorrichtungen ausgestattet sein können, und um von einer Maschinenkinetik angetrieben zu werden, die dazu in der Lage ist, Kupplungen zu übertragen oder Einwegkupplungen einzuschließen.

18. Elektrische Leistungsquelle nach Anspruch 5 oder Anspruch 6, wovon eine Einweg-Übertragungs-Kupplung (SWC 100) zwischen der Maschineneinheit (ICE 101) und dem Generator (G 101) bereitgestellt ist, wobei eine Einweg-Übertragungs-Kupplung (SWC 101) zwischen dem Generator (G 101) und dem Lastmotor (M 101)-Ausgangsende oder der Last installiert ist, wobei die Last, während sie einen Trägheitsleerlauf in eine Richtung ausübt, dazu in der Lage ist, den Generator (G101) anzutreiben, so dass dem Generator (G 101) ermöglicht wird, einen Bremsvorgang aufgrund der wiedergewonnenen Erzeugung durchzuführen, während sich die Einweg-Übertragungskupplung (SWC 100) im Leerlauf befindet, wenn die Maschineneinheit (ICE 101) den Generator (G 101) antreibt, wobei sich die Einwegübertragungskupplung (SWC 101) im Leerlauf befindet; wobei die Einweg-Übertragungskupplung mit künstlichen oder mechanischen oder leistungsgetriebenen oder fluidgetriebenen Kupplungsvorrichtungen ersetzt werden kann, oder eine Version der Kombination davon darstellen kann, während die Kupplung in einem gelösten Zustand einer Einwegkupplung in einem Leerlaufstatus gleichwertig ist, während die Kupplung in einem geschlossenen Zustand einer Einwegkupplung in einem gelösten Zustand gleichkommt.

## Revendications

1. Source d'énergie électrique pour distribuer de l'énergie électrique à une charge, la source d'alimentation comprenant :
une batterie de stockage (BAT101) ;
un moteur (ICE101) ;
un générateur (G101) apte à être entraîné par le moteur (ICE101) pour générer de l'énergie électrique pour un chargement de la batterie (BAT101) et pour une distribution à la charge ;
un contrôleur qui commande le fonctionnement du moteur pour distribuer de l'énergie électrique de manière sélective à la batterie (BAT101) et à la charge, et qui commande la proportion d'énergie électrique distribuée à la charge par la batterie (BAT101) et le générateur (G101) ;
un testeur d'état de stockage (BCD101) agencé pour tester le chargement, le déchargement ou des erreurs de chargement statiques durant les opérations de recyclage de chargement/déchargement répétées ;
un moteur électrique de charge (M101) capable de fonctions de rotation en marche avant, de rotation en marche arrière, de régulation de vitesse et d'arrêt ;
un détecteur de courant (ID100) relié en série à une borne de sortie du générateur ;
un détecteur de courant (ID200) relié en série à une borne de sortie de la batterie de stockage (BAT101) ;
une commande excitée par champ (FEC101) agencée pour réguler l'énergie électrique en provenance du générateur (G101) ;
un mécanisme asservi d'alimentation en carburant (FEC101) agencé pour commander l'alimentation du moteur en carburant, et ainsi réguler la vitesse de rotation et le couple du moteur ;
un moteur électrique de démarreur (M100) agencé pour générer une énergie de rotation pour démarrer le moteur ;
un contrôleur d'entraînement de moteur électrique de démarreur (CD100) agencé pour entraîner le moteur électrique de démarreur ;
un contrôleur d'entraînement de moteur électrique de charge (CD101) agencé pour entraîner le moteur électrique de charge ; une unité centrale de commande (CCU101) reliée au moteur, au générateur, à la batterie de charge, au moteur électrique de charge ou à d'autres charges dans le système de commande et agencée pour répondre à des instructions en provenance du dispositif de commande manuelle et à des signaux de rétroaction de manière à gouverner des interactions entre le moteur, le générateur, la batterie de stockage, le moteur électrique de charge ou d'autres charges dans le système de commande ;
un détecteur de vitesse de moteur (SPD101) agencé pour convertir un déplacement angulaire du moteur en un signal de vitesse de moteur qui est injecté à l'unité centrale de commande (CCU101), et réguler ainsi l'alimentation en carburant du mécanisme asservi d'alimentation en carburant au moteur ;
un dispositif de commande manuelle (MI101) pour alimenter l'unité centrale de commande de manière à commander le fonctionnement de système global ;
une alimentation électrique auxiliaire (B+) agencée pour distribuer de l'énergie à l'unité centrale de commande, à l'unité de commande manuelle et aux contrôleurs d'entraînement ;
**caractérisée par le fait que** l'unité centrale de commande (CCU101) est en outre agencée de telle sorte que, si la charge sur le moteur électrique de charge (M101) augmente de telle sorte que l'énergie électrique entraînant le moteur électrique de charge (M101) dépasse une valeur de seuil pendant un temps réglé, elle fonctionnera pour démarrer le moteur (ICE101) entraînant le générateur (G101) pour fournir de l'énergie électrique au moteur de charge et fonctionnera pour arrêter le moteur (ICE101) une fois que l'énergie de sortie du moteur électrique de charge (M101) reprend un service nominal normal au-delà d'un temps prédéterminé.

2. Source d'énergie électrique selon la revendication 1, comprenant en outre un détecteur de gaz nuisible agencé pour détecter la concentration de gaz nuisibles dans l'environnement voisin, de telle sorte qu'un fonctionnement du moteur est arrêté lorsque la concentration détectée dépasse une marge de sécurité, mais que le fonctionnement reprend une fois qu'elle chute sous la marge de sécurité.

3. Source d'énergie électrique selon la revendication 2, dans laquelle l'unité centrale de commande est agencée pour démarrer le moteur (ICE101) lorsque le courant détecté par le détecteur de courant (ID200) dépasse un courant fixé alors que le moteur électrique de charge est alimenté en énergie par la batterie (BAT101) seule, de telle sorte que la charge est alimentée en énergie conjointement par la batterie (BAT101) et par le moteur (ICE101) avec le générateur (G101).

4. Source d'énergie électrique selon l'une quelconque des revendications précédentes, comprenant en outre :
un détecteur de température ambiante (SD102) agencé pour détecter de manière automatique les températures ambiantes, avec sa sortie transmise à l'unité centrale de commande ;
dans laquelle, lorsque le moteur électrique de charge (M101) est entraîné par la batterie de stockage (BAT101) seule, l'unité centrale de commande (CCU101) est agencée de telle sorte que, si la charge sur le moteur électrique de charge (M101) augmente de telle sorte que l'énergie électrique entraînant le moteur électrique de charge (M101) dépasse une valeur de seuil et un temps réglé, elle fonctionnera pour démarrer le moteur (ICE101) entraînant le générateur (G101) pour fournir de l'énergie électrique au moteur électrique de charge (M101) conjointement avec la batterie de stockage (BAT101) ;
la source d'énergie électrique comprenant en outre une commande excitée par champ (FEC101) agencée pour réguler l'énergie électrique en provenance du générateur (G101) ;
l'unité centrale de commande (CCU101) suspendant le chargement, et arrêtant d'autres formes de fonctionnement, lorsque la température ambiante dépasse une valeur de seuil donnée, et de telle sorte qu'un fonctionnement de système continué est autorisé lorsque la température ambiante est trouvée appartenir à une plage de température de travail prédéterminée.

5. Source d'énergie électrique selon la revendication 1, agencée pour maintenir la batterie de stockage (BAT101) dans une condition chargée de manière adéquate par utilisation de la dynamo de moteur en tant qu'alimentation électrique, de manière à offrir un chargement auxiliaire à temps pour transmettre à un moteur de charge ou d'autres charges, ou encore des batteries stationnaires ou chargées sur porteur ; dans laquelle, en fonctionnement, une mesure d'essai est réalisée, sur la base de modes de commande manuelle, ou bien sur l'unité centrale de commande programmée à cette fin, en tenant compte de la condition de stockage de batterie, par rapport à la batterie et avec les signaux d'essai ainsi obtenus comparés avec la valeur de commande ou programmée mentionnée ci-dessus, pour effectuer un fonctionnement commandé proportionné de l'ensemble de générateur entraîné par moteur, incorporant facultativement différentes fonctions comprenant l'une quelconque ou l'ensemble de ce qui suit :
(1) l'aptitude à charger et initier le moteur électrique et le moteur thermique, le générateur exclusivement par chargement de la batterie (BAT101) lorsque, vis-à-vis de l'essai de l'état de saturation de batterie, le stockage de batterie est confirmé avoir chuté à un niveau préréglé ;
(2) l'aptitude à délivrer de l'énergie au moteur électrique de charge ou autres charges et à la batterie de stockage, sur la base du résultat d'essai du signal d'état de saturation de batterie de stockage, par réalisation d'une comparaison des modes de fonctionnement programmés dans l'unité centrale de commande, suivie par la sortie d'énergie nominale ou ajustable ou bien de courant fixe ou de courant commandé par une commande correspondante du générateur, ce par quoi le facteur de chargement est mis en correspondance ou par une répartition proportionnée de courants distribués aux deux, avec cela il devient possible de passer automatiquement à une fonction (3) où la charge aggravée en conséquence a dépassé le facteur de puissance de génération du générateur, mais de revenir à un régime de fonctionnement moteur lorsque le facteur de charge chute à un niveau au-dessous du facteur de puissance de génération du générateur ;
(3) l'aptitude à effectuer une commande relative du générateur pour une sortie de courant fixe ou de courant commandé, ou bien pour un facteur de puissance fixe, ou une sortie de facteur de puissance commandée, sur la base de la condition de stockage de courant de la batterie de stockage, de manière à répartir, d'une manière commandée, le générateur et la batterie en fonction du facteur de puissance de générateur et du facteur de chargement ou des deux courants, de telle sorte que le générateur et la batterie de stockage entraîneront conjointement le moteur électrique de charge ou d'autres charges, et finalement passer à une fonction (2) où la charge s'est réduite avec le facteur de chargement dégradé à un niveau au-dessous du facteur de puissance du générateur, mais revenant à une fonction motrice exécutée en fonctionnement lorsque le facteur de charge atteint un niveau qui est supérieur au facteur de génération du générateur ;
(4) l'aptitude à vérifier un état de courant de charge du moteur électrique de charge lorsqu'il est entraîné par la batterie seule, de telle sorte qu'une fois que le facteur de puissance du moteur électrique de charge ou autre augmente à un niveau au-delà de la valeur réglée ou au-delà du temps réglé, le moteur et le générateur sont automatiquement entraînés en fonctionnement alors que le modus operandi programmé dans l'unité centrale de commande fonctionnera pour arriver à un fonctionnement sous un courant fixe, ou un courant commandé, ou un taux de puissance fixe, ou un taux de puissance commandé, dans un effort pour entraîner la charge conjointement avec la batterie de stockage, le fonctionnement de la dynamo de moteur sera de plus arrêté, suivi par la distribution poursuivie d'énergie depuis la batterie de stockage au moteur électrique de charge ou autre charge une fois que le facteur de puissance du moteur électrique de charge ou d'autre charge reprend un service nominal normal au-delà d'un temps prédéterminé ;
(5) l'aptitude à dûment entraîner le moteur et le générateur en réponse à une manipulation de commande manuelle de telle sorte que le générateur, avec sa sortie, peut entraîner de manière seule le moteur électrique de charge ou autre charge, et qu'une fois que la charge chargée sur le moteur électrique de charge intensifie un potentiel stocké dans la batterie, peut conjointement entraîner la charge avec un potentiel produit par le générateur, et en outre que, une fois que la charge de moteur redevient normale, la batterie arrêtera de délivrer en sortie de l'énergie de telle sorte que la charge est entraînée plutôt par de l'énergie provenant de la dynamo de moteur ;
(6) l'aptitude à accepter une manipulation en provenance de l'unité de commande manuelle de manière à initier le moteur et la dynamo pour un courant fixe, un courant commandé ou bien une génération à taux de puissance fixe ou à taux de puissance de charge de commande, de manière à entraîner le moteur électrique de charge et charger la batterie de stockage d'une manière proportionnelle au taux de puissance de génération et au taux de charge correspondants ou en variante au courant dans les deux cas également correspondants, avec cela il est possible de passer de manière automatique à un mode de fonction (7) une fois que la charge est aggravée à un niveau au-delà du taux de puissance de génération du générateur, mais revient à une exécution fonctionnelle motrice une fois que le facteur de charge revient à un niveau inférieur au même taux de puissance de génération ;
(7) l'aptitude à accepter une manipulation en provenance de l'unité de commande manuelle de manière à initier le moteur et la dynamo pour un courant fixe, un courant commandé ou bien une génération à taux de puissance fixe ou à taux de puissance commandé, de manière à charger la dynamo et la batterie pour entraîner conjointement le moteur électrique de charge ou l'autre charge suivant la génération de puissance, le chargement par, ou le courant dans les deux cas dans une distribution proportionnée, également de telle sorte que le fonctionnement passera à la fonction (6) lorsque la charge est réduite et lorsque la puissance de chargement est inférieure à la puissance de génération, mais reviendra à un mode de fonction motrice lorsque la puissance de chargement dépasse le taux de puissance de génération ;
(8) l'aptitude à accepter une manipulation en provenance de l'unité de commande manuelle de manière à initier le moteur et la dynamo pour charger de manière individuelle par rapport à la batterie ;
(9) l'aptitude à accepter une manipulation en provenance de l'unité de commande manuelle de manière à initier le moteur et la dynamo pour programmer de manière individuelle les temps de chargement pour limiter des courants de chargement à la batterie, un facteur de puissance à la batterie et pour déclencher une suspension du chargement à la dynamo de moteur, la commande du temps de chargement dans cette liaison comprenant un chargement supplémentaire ou un chargement de saturation ou un chargement d'urgence, tel qu'un chargement partiellement appliqué, à la batterie ;
(10) la capacité d'arrêter le fonctionnement de l'ensemble de dynamo de moteur lorsque la batterie atteint une saturation prédéterminée, telle que déterminée au cours du fonctionnement sous la fonction (1), (8) ou (9) ;
(11) la capacité d'arrêter le chargement par rapport à la batterie sans affecter l'énergie qui est délivrée en sortie par la dynamo de moteur au moteur de chargement à travers une manipulation soit de l'unité de commande manuelle, soit de l'unité centrale de commande une fois que la batterie atteint un point de saturation prédéterminé, vérifié au cours du fonctionnement sous la fonction (2) ou (6) ;
(12) la capacité d'arrêter le fonctionnement de la dynamo de moteur de telle sorte qu'une sortie d'énergie soit délivrée au moteur électrique de charge à partir de la batterie à travers une manipulation soit de l'unité de commande manuelle, soit de l'unité centrale de commande une fois que la batterie a atteint un point de saturation prédéterminé, vérifié au cours du fonctionnement sous la fonction (2) ou (6) ;
(13) la capacité pour la dynamo de moteur de continuer à fonctionner de manière simultanée avec la batterie sortant d'un état de chargement pour délivrer conjointement de l'énergie d'entrée avec la dynamo au moteur électrique de charge à travers une manipulation d'une unité de commande manuelle, soit une unité centrale de commande une fois que la batterie a atteint un point de saturation prédéterminé, vérifié au cours du fonctionnement sous la fonction (2) ou (6) ;
(14) la capacité de réguler de manière relative le taux de puissance de génération du générateur sur la base du signal de courant de chargement arrivant par suite de l'essai conduit lorsque le générateur charge seul la batterie ou délivre de manière simultanée de l'énergie au moteur électrique de charge tout en chargeant en même temps la batterie, au cours du fonctionnement sous la fonction (1), (2), (6), (8) ou (9) ;
(15) une surveillance de gaz nuisibles périphériques par essai de la concentration de gaz nuisibles périphériques, de telle sorte que, une fois qu'une valeur critique est dépassée, le chargement est arrêté, un autre fonctionnement fonctionnel est arrêté immédiatement et le redémarrage est réalisé une fois que la lecture a chuté à un niveau au-dessous de la valeur critique, l'essai étant conduit lorsque le chargement est exécuté avec une transmission automatique ou manuelle, ou en variante un autre fonctionnement fonctionnel est en cours, au moyen d'un détecteur de gaz nuisibles ;
(16) une surveillance de température ambiante par surveillance d'un détecteur de température ambiante, pour arrêter le chargement ou autre fonctionnement lorsque la température dépasse une valeur prédéterminée tout en autorisant d'autres modes de fonctionnement dans une plage de température normale, mais de telle sorte que le moteur et le générateur sont à transmission automatique lorsque la température chute trop bas ou dans un état d'arrêt, de manière à maintenir un chargement entretenu pour la batterie de telle sorte que cette dernière est maintenue dans une condition prête à servir dans toutes les éventualités ; un système de charge auxiliaire de batterie de stockage tournant à surveillance automatique étant actionnable pour placer la batterie de stockage dans une condition de stockage d'énergie pour décharger la batterie de stockage, prolongeant ainsi la durée de vie de de service l'ensemble batterie.

6. Source d'énergie électrique selon la revendication 5, le système de charge auxiliaire de batterie de stockage tournante à surveillance automatique comprenant :
la batterie (BAT 101) qui comprend en outre une batterie secondaire capable d'un fonctionnement de recyclage de chargement/déchargement répété, qui peut être, par exemple, une batterie à l'acide de plomb, de structure nickel/cadmium, nickel/azote ou nickel/zinc ou bien du système lithium, ou encore du système zinc ou autre système de batterie secondaire ;
le testeur d'état de stockage (BCD 101) fourni pour conduire un essai continu ou périodique ou bien convertir une sortie de signal d'énergie numérique ou analogique pour comparaisons à l'aide de chargement ou déchargement pertinent, ou d'erreurs de chargement statiques, suivi par un traitement de correction, et comprend des éléments électroniques à semi-conducteurs ou mécaniques qui forment des circuits d'essai analogiques, ou en variante des circuits d'essai numériques consistant en des microprocesseurs et en logiciels pertinents, des éléments électroniques d'interfaçage ou bien une combinaison des deux exécutions ;
un régulateur (RG 101) composé d'éléments électroniques à semi-conducteurs ou mécaniques, facultativement dépendant des exigences de système, qui, en se référant à une tension/courant de sortie en provenance du générateur (G 101), ou en variante en recevant des instructions venant de l'unité centrale de commande (CCU 101), renvoie une énergie de sortie au générateur moteur (G 101) ;
un premier détecteur de courant (ID 100) connecté en série à la borne de sortie du générateur (G 101), avec un moyen d'échantillonnage de courant comprenant des éléments résistifs ou conducteurs ou bien des capteurs de champs magnétiques, ou encore des moyens d'accumulation de chaleur ou de type à effet électromagnétique capables de produire des valeurs d'essai de courant à convertir en signaux analogiques avec lesquels est produit un courant de sortie pour le générateur (G 101) qui est testé ou un courant d'entrée sous des conditions spécifiques, pour commander, réguler le régulateur (RG 101), ou bien pour être injecté à l'unité centrale de commande (CCU 101), de manière à commander à la fois la condition de fonctionnement du générateur (G101), ce qui est également un choix facultatif ;
un second détecteur de courant (ID 200) monté en série entre les bornes d'entrée/sortie de batterie (BAT 101) et la commande de transmission (CD 101) ou un redresseur (IVT 101) ; avec des moyens d'échantillonnage de courant comprenant un élément purement résistif ou purement conducteur ou une combinaison des deux, ou bien des éléments qui peuvent être détectés, testés par l'intensité des champs magnétiques, ou bien composés de dispositifs capables de produire des signaux analogiques par les courants mesurés du type à accumulation de chaleur ou du type à essai d'effet magnétique, destinés à tester le courant d'entrée ou de sortie de la batterie à tester, puis être à être injectés à la commande d'entraînement (CD 101) ou l'unité centrale de commande (CCU 101), de manière à commander de manière appropriée la puissance de sortie (BAT 101), ce qui est également un choix facultatif ;
1"ensemble moteur (ICE 101) comprenant un moteur à combustion intérieure tournant ou alternatif, utilisant de l'essence ou du gasoil ou un gaz ou autre carburant fluide pour conversion en énergie dynamique pour la sortie ;
le générateur (G 101) comprenant un mécanisme à armature ou sans armature, C.C. ou C.A., pour convertir l'énergie de rotation de moteur arrivant en puissance C.A. ou C.C., ou dans le cas d'une puissance C.A., pour convertir celle-ci par redressement au redresseur (B 101) en sortie C.C. pour entraîner le moteur électrique de charge (M 101) et pour charger les batteries ;
le redresseur (BR 101) qui convertit par redressement d'une puissance C.A. monophasée ou multiphasée en puissance C.C. en traitant avec les dynamos C.A., un choix facultatif dépendant d'exigences de système ;
la commande excitée par champ (FEC 101) composée d'éléments mécaniques ou à semi-conducteurs, pour commander la puissance arrivant du générateur C.A. ou C.C. comprenant des enroulements excités par champ, sur la base de l'état de sortie de générateur et des réglages de dispositif de commande manuelle (MI 101) et d'unité centrale de commande (CCU 101), de manière à atteindre une commande réglementaire de tension, un taux de courant ou de puissance, cette caractéristique étant à omettre lorsque le pôle de générateur est d'un type aimant permanent ;
le détecteur de vitesse de moteur (SPD 101) qui est analogique ou numérique, capable de convertir des déplacements angulaires en signaux électriques correspondants dans des formes électromagnétiques ou photoélectriques de manière à injecter des signaux de vitesse de moteur à l'unité centrale de commande (CCU 101), et réguler en conséquence l'alimentation de carburant depuis le mécanisme asservi (FC 101) à l'ensemble moteur, la valeur de signal de ce dispositif peut également être substituée par la valeur de tension ou de fréquence analogique ; le détecteur de vitesse de moteur (SPD 101) peut consister en une structure mécanique, telle que, par exemple, une structure d'essai centrifuge ou autrement une structure mécanique, et réalisée en interaction mécanique avec le mécanisme asservi d'alimentation en carburant (FC 101) de manière à entraîner l'ensemble moteur (ICE 101) en rotation à vitesse fixe, les deux exécutions décrites précédemment étant à adopter en fonction de la nature du système impliqué, et le dispositif étant par ailleurs un choix facultatif dépendant des exigences de système ;
le moteur électrique de démarreur (M 100) est composé d'une structure électrique synchrone ou asynchrone, C.A. ou C.C., avec armature ou sans armature, pour recevoir une puissance d'entrée de manière à produire une puissance de rotation pour initier à son tour l'ensemble moteur (ICE 101) ;
le dispositif asservi d'alimentation en carburant (FC 101) est destiné à recevoir des instructions asservies en puissance électrique ou en variante une interaction mécanique, structurée de manière à commander l'alimentation en carburant vers l'ensemble moteur (ICE 101), et qui à son tour régule la vitesse de rotation et la torsion sur la partie de l'ensemble moteur (ICE 101), les deux exécutions étant facultatives en fonction de la composition de système ;
un réservoir de carburant (TK101) où un carburant de moteur est stocké, pour commander le carburant distribué à l'ensemble moteur (ICE 101) au moyen d'une ligne de carburant et du dispositif asservi d'alimentation en carburant (FC 101) interconnecté à celle-ci ;
la commande d'entraînement de moteur électrique de démarreur (CD 100) composée d'éléments de puissance à semi-conducteurs ou mécaniques et de circuits associés, pour amener le moteur électrique de démarreur en fonctionnement ou bien pour arrêter son fonctionnement ;
la commande d'entraînement de moteur électrique de charge (CD 101) composée d'éléments à semi-conducteurs ou mécaniques et de circuits pertinents, pour commander le moteur électrique de charge (M 101) pour un fonctionnement de rotation en marche avant/arrière, de régulation de vitesse, de démarrage et d'arrêt, par rapport auquel la quantité à distribuer dépend des exigences de système ;
le moteur électrique de charge (M 101) composé d'un moteur C.A. ou C.C., avec armature ou sans armature, synchrone ou asynchrone, réalisant une rotation en marche avant, une rotation en marche arrière, une régulation de vitesse, un fonctionnement et un arrêt et de telle fonctions analogues, de manière à transmettre une charge, le moteur électrique de charge (M 101) peut également être réalisé pour consister en d'autres charges par rapport auxquelles la quantité d'installation est dictée par les exigences de système ;
l'alimentation électrique auxiliaire (B+) avec de l'énergie provenant d'une batterie (BAT 101) dans le système, ou avec un ensemble de batterie disposé de manière additionnelle servant d'alimentation électrique auxiliaire ou issue d'une génération par dynamo, et qui dans un effort pour offrir une alimentation électrique à l'unité centrale de commande (CCU 101), ou l'unité de commande manuelle (MI 101), ou la commande d'entraînement (CD 101) au moteur électrique de charge (M 101), ou bien au détecteur de gaz nuisibles (SD101), ou à la commande d'entraînement (CD 101) au moteur électrique de démarrage (M 100), ou à la commande excitée par champ (EFC 101), ou encore au régulateur (RG 101), ou encore des installations d'éclairage pour fonctionnement, où une batterie auxiliaire est prévue, le générateur peut être équipé de manière additionnelle d'enroulements de génération correspondants pour faciliter le chargement de la batterie auxiliaire ;
l'onduleur C.C. à C.A. (IVT 101) composé d'éléments de nominaux de puissance à semi-conducteurs et de circuits associés, pour convertir une puissance C.C. en puissance C.A. de manière à alimenter des charges C.A., par rapport auxquelles la quantité à distribuer dépend des exigences de système ;
l'unité centrale de commande (CCU 101) : composée d'éléments à semi-conducteurs ou mécaniques qui forment une structure en variante analogique ou numérique ou une structure combinée des deux exécutions ; ou encore un microprocesseur comprenant des logiciels de fonctionnement et de commande, un convertisseur N-A, un convertisseur A-N ou d'autres éléments ckt pertinents, avec un ensemble de modes de fonctionnement interne réglés avec des instructions venant du dispositif de commande manuelle (MI 101) ou de signaux de rétroaction de manière à gouverner des interactions entre le générateur (G 101), la batterie (BAT 101), le moteur électrique de charge (M 101) ou d'autres charges dans le système de commande, ainsi que d'autres dispositifs associés pour un fonctionnement régulé ;
le dispositif de commande manuelle (MI 101) est composé de manière unique d'éléments à semi-conducteurs ou mécaniques dans un mode analogique ou un mode numérique, tels que séparés de ou bien composés les uns avec les autres, pour injection à l'unité centrale de commande de manière à commander le fonctionnement global du système, par rapport auquel la quantité à installer dépend des exigences de système ;
le détecteur de gaz nuisibles (SD 101) est disposé pour détecter la concentration de gaz nuisibles, s'il y en a, dans les environnements voisins lorsque le chargement est en cours, réalisé au moteur, que l'on soit dans un mode de commande manuelle ou dans un mode automatique d'activation, et le fonctionnement sera arrêté lorsque la concentration telle que détectée dépasse une marge de sécurité, mais autorisée pour un fonctionnement continué lorsque la lecture détectée chute pour appartenir à une tolérance, par rapport à laquelle la quantité d'installation est dictée par des exigences de système ;
le détecteur de température ambiante (SD 102) composé de capteurs de température, en outre de composants à semi-conducteurs ou mécaniques, destinés à une détection automatique de températures ambiantes, et avec le signal de puissance électrique équivalente détecté transmis à l'unité centrale de commande (CCU 101), de telle sorte que le chargement peut être suspendu, d'autres formes d'opération arrêtées lorsque la température ambiante ainsi identifiée dépasse une valeur de seuil donnée, alors qu'un fonctionnement de système continué est autorisé lorsque la température ambiante est trouvée appartenir à des plages de températures de travail nominales ; par rapport auquel la quantité à distribuer dépend des exigences de système, et le fait que, par ailleurs, celui-ci est un choix facultatif.

7. Source d'énergie électrique selon l'une des revendications 5 ou 6, dans laquelle le système de charge auxiliaire de batterie de stockage tournante à surveillance automatique comprend en outre un circuit de commande comprenant :
l'agencement d'une diode de blocage en série avant (CR101) à relier à la borne de sortie de la batterie (BAT 101), qui est montée en parallèle avec la borne de sortie C.C. sortant du redressement C.C. ou C.A., du générateur (G 101), entre les deux bornes de diodes (CR 101) est monté en parallèle un régulateur (RG 101), de telle sorte que (RG 101) est rendu actif pour réguler une puissance qui est chargée du générateur à la batterie ; (RG 101) peut être en outre agencé pour être un récepteur pour des signaux de commande émis par l'unité centrale de commande (CCU 101) sur la base du résultat d'essai en provenance du détecteur de stockage de batterie (BCD 101) de manière à autoriser une régulation de taux de chargement ou de courants, et également une commande de démarrage ou d'arrêt de fonctions de chargement.

8. Source d'énergie électrique selon l'une des revendications 5 ou 6, dans laquelle le système de charge auxiliaire de batterie de stockage tournante à surveillance automatique comprend en outre un circuit de commande comprenant :
l'agencement d'une diode de blocage (CR 101) connectée en série avant à (BAT 101), pour ainsi former une sortie parallèle avec la borne de sortie C.C. suivant un redressement C.C. ou C.A. du générateur (G 101).

9. Source d'énergie électrique selon l'une des revendications 5 ou 6, dans laquelle le système de charge auxiliaire de batterie de stockage tournante à surveillance automatique comprend en outre un circuit de commande comprenant :
l'agencement d'une diode de blocage (CR 101) connecté en série avant à la borne de sortie de la batterie (BAT101), pour ainsi former une sortie parallèle avec la borne de sortie C.C. résultant du redressement C.C. ou C.A. du générateur (G 101), avec une impédance résistive ou conductrice ou composite résistive/conductrice (Z 101) placée en montage parallèle en travers des deux bornes de la diode de blocage (voir Figure 20) au lieu du fonctionnement correct ou le régulateur (RG 101) pour restreindre le chargement de courants du générateur à la batterie.

10. Source d'énergie électrique selon l'une des revendications 5 ou 6, dans laquelle le système de charge auxiliaire de batterie de stockage tournante à surveillance automatique comprend en outre un circuit de commande comprenant :
la connexion en détection de série avant d'une diode de blocage (CR 101) à la borne de sortie de la batterie (BAT 101), pour former une sortie parallèle en travers de la borne de sortie C.C. suivant un redressement C.C. ou C.A. du générateur (G 101), alors que les deux bornes de la diode de blocage (CR 101) peuvent être en outre parallèles par rapport à un commutateur bidirectionnels commandable à semi-conducteur ou mécanique (SSW 101) pour permettre une commande d'altération de circuit ouvert ou de circuit fermé aux bornes de sortie à la fois de la batterie (BAT 101) et du générateur (G 101) au lieu du fonctionnement correct du régulateur (RG 101), qui à son tour autorise une commande de l'état de chargement du générateur (G101) à la batterie (BAT 101), et de l'état de sortie de (BAT 101) au moteur électrique de charge (M 101).

11. Source d'énergie électrique selon l'une des revendications 5 ou 6, dans laquelle le système de charge auxiliaire de batterie de stockage tournante à surveillance automatique comprend en outre un circuit de commande comprenant :
l'agencement pour la diode de blocage (CR 101) connectée en détection de série avant à la borne de sortie de (BAT 101), et la borne de sortie d'une diode série (CR 101) en connexion avant à (BAT 101), au moyen de laquelle une puissance C.C. est distribuée en provenance du générateur (G 101) qui est gouverné par le régulateur (RG 101), ou en variante un élément d'impédance (Z 101) portant la même fonction ou bien un commutateur bidirectionnels commandable (SSW 101), pour être tous de la même polarité, alors que cette borne venant de la borne de puissance du générateur, connectée à la borne de sortie d'une diode de contact commun (COM) (CR 101) en commun avec le commutateur bidirectionnel (SSW 102) dans une commande de point C peut, tel que dicté par le circuit, une exigence, être connecté en série au point NO et au point NC du commutateur bidirectionnel (SSW 102) dans une commande de point C, ou en variante un renversement d'une telle connexion est autorisé de manière à rendre possible une commande par le générateur (G 101) de l'état de sortie de l'état de chargement de la batterie, et celui de la batterie au moteur électrique de charge (M 101) ou autre charge.

12. Source d'énergie électrique selon l'une des revendications 5 ou 6, dans laquelle le système de charge auxiliaire de batterie de stockage tournante à surveillance automatique est capable de fonctionner sous un réglage d'unité centrale de commande (CCU) ou en variante d'une commande manuelle ; et la restriction du générateur pour qu'il produise une sortie après que le moteur a été initié pendant un certain temps, à savoir, la sortie de générateur est nécessairement en retard de l'initiation de moteur.

13. Source d'énergie électrique selon l'une des revendications 5 ou 6, dans laquelle le système de charge auxiliaire de batterie de stockage tournante à surveillance automatique est capable de fonctionner sous un réglage d'unité centrale de commande (CCU) ou en variante d'une commande manuelle ; et alors que le système est en fonctionnement continu, l'ensemble moteur doit être maintenu dans une condition de réchauffement en fonctionnement de ralenti lorsqu'aucune sortie d'énergie ne vient du générateur, de manière à se préparer pour un fonctionnement de sortie.

14. Source d'énergie électrique selon l'une des revendications 5 ou 6, dans laquelle le système de charge auxiliaire de batterie de stockage tournante à surveillance automatique est capable de fonctionner sous un réglage d'unité centrale de commande (CCU) ou en variante d'une commande manuelle ; et
alors que tout le système arrête de fonctionner, le générateur de moteur doit continuer à fonctionner en dissipation de chaleur de manière à empêcher une accumulation de chaleur dans le moteur, et lors de l'achèvement du fonctionnement en dissipation de chaleur, arrêter de fonctionner totalement.

15. Source d'énergie électrique selon l'une des revendications 5 ou 6, dans laquelle le système de charge auxiliaire de batterie de stockage tournante à surveillance automatique est capable de fonctionner sous un réglage d'unité centrale de commande (CCU) ou en variante d'une commande manuelle ; et
alors que le système fonctionne, le générateur de moteur doit être soumis à une commande effectuée à partir d'un premier dispositif d'essai de température (TS 101) situé dans le moteur ou d'un second dispositif d'essai de température (TS 102) situé dans le générateur, de telle sorte que la rotation du moteur est arrêtée lorsque la température est trouvée dépasser un niveau prédéterminé, ou en variante est amenée à produire une sortie de puissance inférieure.

16. Source d'énergie électrique selon l'une des revendications 5 ou 6, dans laquelle le système de charge auxiliaire de batterie de stockage tournante à surveillance automatique est capable de fonctionner sous un réglage d'unité centrale de commande (CCU) ou en variante d'une commande manuelle ; et alors que le système est en fonctionnement, lorsqu'en raison d'une manipulation de commande manuelle ou de commande automatique d'unité centrale de commande (CCU), le moteur est réglé à un état préparatoire ou le système arrive à une condition préparée pour l'arrêt, l'ensemble moteur sera entraîné en fonctionnement intermittent, sur la base de la température de moteur qui est prédéterminée dans l'unité centrale de commande (CCU), de manière à maintenir un état préparatoire avantageux à une initiation de température.

17. Source d'énergie électrique selon l'une des revendications 5 ou 6, dont la cinétique de moteur telle qu'associée à l'ensemble générateur-moteur, plus que pour la transmission du générateur, peut servir à transmettre un chauffage ou un refroidissement au régulateur de température du type pompe et entraîné par une énergie mécanique ou bien d'autres dispositifs périphériques aptes à être transmis par entraînements mécaniques tournants qui peuvent en même temps, tel que dicté par les exigences, être équipés de manière sélective de dispositifs d'entraînement de moteur électrique, et pour être entraîné par une cinétique de moteur capable de transmettre à des embrayages ou incorporant des embrayages unidirectionnels.

18. Source d'énergie électrique selon l'une des revendications 5 ou 6, dans laquelle est prévue un embrayage de transmission unidirectionnel (SWC 100) entre un ensemble moteur (ICE 101) et un générateur (G 101), avec un embrayage de transmission unidirectionnel (SWC 101) installé entre le générateur (G 101) et la borne de sortie du moteur électrique de charge (M 101) ou la charge, avec la charge, tout en exerçant un fonctionnement ralenti inertielle dans une direction, capable d'entraîner le générateur (G101), de telle sorte que le générateur (G 101) peut réaliser une action de freinage en raison d'une génération recyclée alors que l'embrayage de transmission unidirectionnel (SWC 100) est en fonctionnement de ralenti ; lorsqu'un ensemble moteur (ICE 101) entraîne le générateur (G 101) en fonctionnement, l'embrayage de transmission unidirectionnel (SWC 101) fonctionnera au repos ; ledit embrayage de transmission unidirectionnel peut être remplacé par des dispositifs d'embrayage alimentés par fluide ou entraînés par puissance ou mécaniques ou artificiels ou se présenter sous la forme d'une combinaison de ceux-ci, alors qu'un embrayage dans un statut désengagé est équivalent à un embrayage unidirectionnel dans un état de fonctionnement de ralenti, alors qu'un embrayage dans un état de fermeture est équivalent à un embrayage unidirectionnel dans un état désengagé.
